Europäisches Patentamt

European Patent Office

Office européen des brevets

(19)

(11) **EP 0 713 328 B1**

(12) **EUROPEAN PATENT SPECIFICATION**

(45) Date of publication and mention
of the grant of the patent:
**15.09.1999 Bulletin 1999/37**

(51) Int Cl.$^6$: **H04N 1/40**, H04N 1/50

(21) Application number: **95118073.6**

(22) Date of filing: **16.11.1995**

(54) **Image forming for silver halide photographic material, providing non-uniformity correction between exposure elements**

Bildaufzeichnung für photographisches Silberhalogenidmaterial, mit Korrektur der Inhomogenität zwischen Belichtungselementen

Enregistrement d'images pour matériau photographique à halogénure d'argent, avec correction de non-uniformité entre les éléments d'exposition

(84) Designated Contracting States:
**DE GB**

(30) Priority: **16.11.1994 JP 28190394**

(43) Date of publication of application:
**22.05.1996 Bulletin 1996/21**

(73) Proprietor: **KONICA CORPORATION
Tokyo (JP)**

(72) Inventors:
 • **Kawabe, Toru, c/o Konica Corp.
   Hino-shi, Tokyo (JP)**
 • **Hattori, Tuyosi, c/o Konica Corp.
   Hino-shi, Tokyo (JP)**
 • **Igarashi, Takashi, c/o Konica Corp.
   Hino-shi, Tokyo (JP)**
 • **Okauchi, Ken, c/o Konica Corp.
   Hino-shi, Tokyo (JP)**
 • **Inui, Masao, c/o Konica Corp.
   Hino-shi, Tokyo (JP)**

(74) Representative: **Henkel, Feiler, Hänzel
   Möhlstrasse 37
   81675 München (DE)**

(56) References cited:
   **EP-A- 0 297 603         EP-A- 0 424 174
   US-A- 4 525 729         US-A- 4 596 995
   US-A- 4 897 639**

## Description

## BACKGROUND OF THE INVENTION

The present invention relates to an image forming method by which a continuous gradation recording is conducted on a silver halide photographic material.

Conventionally, the importance of gradation is well known in order to reproduce a high quality image. Stating gradation more concretely, the continuity in continuous gradation, in particular, the reproduction of low density gradation in portions in which the density is almost uniform, such as the moderate gradation in the contrast in the skin of an enlarged human figure or in the sky is very important. In order to realize good gradation in a digital image, gradation control higher than at least 200 levels is required. On the other hand, a technique to record a continuos gradation image with an array light source is well known. The array light source makes it possible to conduct image formation at high speed and at low cost with a small sized apparatus.

For example, the following methods are well known.

(1) A first method such as the Dither method with which a multi-gradation image is depicted in the pseudo sense by combining a plurality of binary pixels.

(2) A second method with which the light intensity or the light emission time period per one time of each element in the array light source is changed independently in accordance with the gradation level.

However, since the first method is a pseudo-depiction method in which the image resolution is sacrificed, it may be difficult to expect high resolution recording. With the second method, a D/A converter and a comparator are needed for each recording element, resulting in a driver circuit for the recording elements which becomes complicated and expensive.

Then, a third method with which a multi-level recording is conducted by plural time exposures with the use of a binary or multi-level array light source may be considered.

However, with the third method, good gradation may be obtained without degrading the resolution and without causing the apparatus to become complicated and expensive. On the other hand, in the condition that the gradation is enhanced, there may be a problem that density unevenness caused by the deviation among the light emission characteristics of each recording element becomes conspicuous.

To overcome this problem, the following correction may be considered. That is, the recording elements are controlled sequentially one by one to emit light and the emitted light intensity of each element is measured, the correction value for the deviation among the light emission characteristics of each recording element is obtained on the basis of the measurement, and the correction is conducted on the basis of the correction value. For example, in the method disclosed in WO-A-90/09890, since recording is conducted on a recording medium of a high contrast gradation characteristics, the gradation depiction is conducted basically only by area modulation, it may be difficult to obtain a sufficiently continuous gradation image. To counter this problem, a technique to improve the gradation continuity with the use of a line-formed light source element with which the recording width per one line is made small may be considered. However, on the other hand, it is difficult to obtain the maximum density due to the deficiency of the light amount, resulting in another problem being raised. Further, in the case of the application on a silver halide photosensitive material of the low contrast recording medium type, the recording mode shows the density modulation and the continuous gradation is enhanced. However, since the density unevenness may not be eliminated appropriately, there may another problem in that the unevenness on the portion in which the density is almost an equal density which is especially important for the reproduction of the gradation becomes conspicuous in comparison with a complicated image portion.

## SUMMARY OF THE INVENTION

The present invention has been conceived in light of the above problems. An objective is to provide an apparatus with which a continuous gradation image can be recorded with a high resolution without causing the apparatus to become complicate and a high cost and a high quality image in which density unevenness is not conspicuous can be formed on a silver halide photosensitive material.

The above objective is attained by the invention as defined in the appended claims.

The following structures can be provided :

In Structure 1-1, in an image forming method in which a plurality of recording elements (or exposing elements) which are aligned in the form of a single line or plural lines and can be driven On-Off independently is driven On-Off plural times by the combination of the same or different time periods in accordance with image data so that exposure is conducted on a silver halide photosensitive material, light amount data are obtained for each recording element on the condition that plural pieces of the recording elements are being driven, and a correction value for an exposure amount of each recording element is obtained on the basis of the light amount data.

In structure 1-2, in an image forming apparatus in which a plurality of recording elements (exposing elements) which are aligned in the form of a single line or plural lines and can be driven On-Off independently is driven On-Off plural times by the combination of the same or different time periods in accordance with image data so that exposure is conducted on a silver halide photosensitive material, the apparatus comprises control means for obtaining light amount data for each recording element on the condition that plural pieces of the recording elements are being driven, for obtaining a correction value for an exposure amount of each recording element on the basis of the light amount data, and for correcting the recording elements on the basis of the correction value.

With the above structures, on the condition that a plurality of recording elements are driven in which the condition is close to an actual image recording condition, a light amount is obtained and the correction is conducted, whereby the density unevenness caused by the deviation of the light emission characteristics of each recording element can be reduced, a high resolution continuous gradation image can be obtained and a high quality image can be formed, without resulting in a complicated apparatus on high cost in comparison with cases where a light amount is measured and the correction is conducted on condition that each element is controlled to emit light one by one and in which the condition is different from the actual image recording condition. Incidentally, the plurality of recording elements arranged in the array form includes a staggered arrangement.

In Structure 2-1, in an image forming method in which a plurality of recording elements which are aligned in the form of a single line or plural lines and can be driven On-Off independently is driven On-Off a plural number of times by the combination of the same or different time periods in accordance with image data so that exposure is conducted on a silver halide photosensitive material, light amount data are obtained for each recording element on the condition that plural pieces of the same kind of recording elements of the recording element to be obtained the light amount are being driven, and a correction value for an exposure amount of each recording element is obtained on the basis of the light amount data. Further, in Structure 2-2, in an image forming apparatus in which a plurality of recording elements which are aligned in the form of a single line or plural lines and can be driven On-Off independently is driven On-Off a plural number of times by the combination of the same or different time periods in accordance with image data so that exposure is conducted on a silver halide photosensitive material, the apparatus comprises control means for obtaining light amount data for each recording element on the condition that plural pieces of the same kind of recording elements of the recording element to be obtained the light amount data are being driven, for obtaining a correction value for an exposure amount of each recording element on the basis of the light amount data, and for correcting the recording elements on the basis of the correction value.

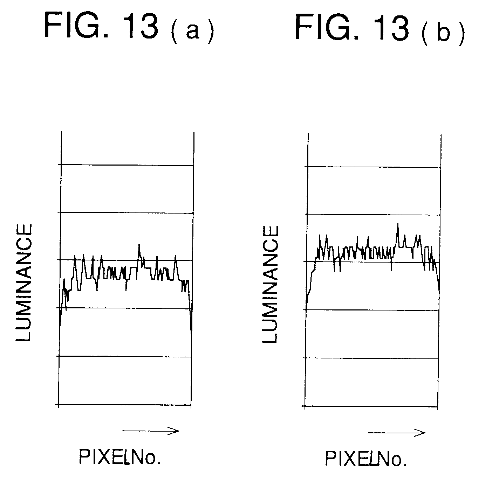

With the above structures, as shown in Figs. 13(a) and 13(b), in the case of the same kind of recording element of the recording element which is used in the image formation, that is, in cases where the light emission characteristic pattern of each element are similar to each other, the correction amount can be obtained with the use of the same kind of recording element of the recording element which is used for the image formation.

In Structure 3, the exposure of the silver halide photosensitive material is conducted on the condition that the plurality of recording elements are driven, and light amount data are obtained by measuring the density of the exposed photosensitive material.

With the above structure, since the correction value is calculated from the density measurement value, the density measurement values can be handled as light amount data on a condition equal to the condition that the recording elements are driven so as to actually output an image, and the correction value can be obtained in the end output form of the density including the influence of the multi-exposure effect by the plural time exposure and an intermittent exposure effect. Whereby a far better image without density unevenness can be obtained.

In Structure 4, the relationship between the density data and the light amount data is obtained so that the density data are converted into light amount data and the correction value of the exposure amount of each recording element is obtained.

With the above structure, the relationship between the density measurement value and the light amount in the total light emission time of the plural time exposures in which the exposure is conducted plural times is obtained and the density measurement value is converted into the light amount so that the correction value is obtained. By this measure, the discontinuity taking place during the plural time exposures in relationship between the emission time and the density can be corrected more precisely, the density unevenness caused by the influence of the discontinuity can be eliminated more precisely, and a far better image with less density unevenness can be obtained. Incidentally, herein, the discontinuity in the gradation means an irregularity which is caused by the responding characteristic of the light source and the photosensitive material during the plural time exposure. In particular, when the control with which the exposure is conducted on the basis of the correction value, the density is measured, and a correction value is obtained again is repeated, the consideration of the relationship between the light amount and the density is preferable, because the convergence ability is further enhanced.

In Structure 5, the plural pieces of the recording elements are driven simultaneously so as to emit light and the exposure amount is measured, whereby the light amount data are obtained.

With the above structure, since the light amount data are obtained directly, the control can be simplified. In addition, the measurement value measured on the condition becomes the data of the unevenness conspicuous portion on a similar condition of the light emitting condition in the actual image recording, the unevenness can be reduced so that a high quality image can be obtained.

In Structure 6, the correction value for the exposure amount of each recording element is obtained with the use of the light amount data and a single light amount which is obtained by measuring an exposure amount in the case that the recording elements are driven one by one so that only a single element emits a light.

With the above structure, by using the measurement value of a single element together, the small pitch density unevenness for each pixel can be reduced in addition to the unevenness of a large pitch, so that the high image quality can be obtained.

In Structure 7, the light amount data is obtained by measuring an exposure amount of each recording element on the condition that a plurality of recording elements are emitting light simultaneously.

With the above structure, since light measurement for a single element is conducted directly on the condition that plural recording elements are emitting light, a correction value can be calculated far more precisely, so that a high quality image can be obtained.

In Structure 8, an image is formed on the silver halide photosensitive material in such a manner that the image data is stored for each line of the recording elements in the latch means, the enable signal which is converted into a combination of the same or different time widths in accordance with image data is generated by stages for every time the image data is latched by the latch means, each of the recording elements is driven respectively by the driving means on the basis of the enable signal generated by stages so as to conduct On-Off recording plural times in accordance with the time width of the enable signal.

With the above structure, the driving means conducts the On-Off recording plural times for the silver halide photosensitive material in accordance with the time period of the enable signal. Accordingly, a continuous gradation recording can be conducted so that a high quality image is obtained without causing the apparatus to be complicated or at high cost.

In Structure 9, the driving means conducts the On-Off recording plural times in accordance with the time width of the enable signal so that the length of the total recording time period of each recording element set by the enable signal generated by stages by the enable signal generating means corresponds to the magnitude of the gradation of the image data. Then, the image is formed by a recording head composed of the recording elements which are used to control a plurality of color lights corresponding to the plurality of photosensitive layers differing in color-sensitivity of the silver halide color photosensitive material.

With the above structure, since the enable signal for each recording element can be set to conform with the sensitivity and gradation characteristics of each photosensitive layer of the silver halide color photosensitive material, a continuous gradation image with a high resolution can be recorded on the silver halide color photosensitive material with the utilization of the characteristics of the silver halide photosensitive material without causing the apparatus to be complicated or at a high cost.

Further, with the effect of the intermittent exposure effect which is a characteristic of the silver halide color photosensitive material, the difference between the high and low sensitivities becomes large and the color cross talk can be reduced so that the color separation can be improved. In addition, the spread of dots can be further extended so that the density of each dot region is unified. As a result, a continuous gradation recording can be conducted so that a high quality image can be obtained without causing the apparatus to be complicated and a high cost for the purpose of the positional registration for each color. Furthermore, degradation in the image quality such as Moire patterns caused by the positional deviation of each color hardly take place, a complicated and expensive apparatus necessary for the position registration of each color are not needed in the above structure.

In Structure 10, the recording head is composed of an LED array, a vacuum fluorescent tube array or a liquid crystal shutter array.

With the above structure, since the plurality of recording elements arranged in an array form of a single line or plural lines is composed of the LED array, the vacuum fluorescent tube array or the liquid shutter array, the discontinuity of the gradation can be reduced.

In Structure 11, the recording elements conduct an exposure for color photographic printing paper of a silver chloride photosensitive material so that an image is formed. Herein, the silver chloride photosensitive material is defined as a photosensitive material comprising a silver halide emulsion layer containing not less than 90 mol % silver chloride.

The silver chloride photosensitive material tends to cause the density unevenness greatly due to the influence of the multi-exposure effect by the plural time exposures or the intermittent exposure effect.

However, with the above structure, since the density unevenness is improved appreciably, the effect of the present invention for the silver chloride photosensitivity material is greater and the developing process can be conducted at a high speed.

In Structure 12, in the time that each time width of the enable signal generated by stages is converted into a multi-valued digital value in accordance with the gradation of the image data, the driving means changes each time width sequentially in accordance with the weight in each bit in the time that the digital value is represented in binary numbers and drives each recording element individually so as to conduct On-Off recording.

With the above structure, the enable signal corresponding to the density value of the image data can be set without causing the apparatus to be complicated and a high cost.

In Structure 13, the driving means drives each recording element individually so as to conduct On-Off record with each time width of $2^nT+t$ of the enable signal, wherein "n" is either 0, 1, 2, ⋯⋯which is a bit number in the time that each time width of the enable signal is converted in a digital value in accordance with the gradation of image data, "T" is a unit of time, "t" is a negative or positive value of a predetermined time.

With the above structure, since the time period of the enable signal can be adjusted respectively by increasing or decreasing "t", a smoother gradation recording can be conducted.

In Structure 14, each time width of the enable signal generated by stages is made constant, the driving means drives each recording element individually so as to conduct On-Off recording by the number of times of the value of the image data.

With the above structure, the apparatus can be a simpler structure and similar gradation recording can be realized by a simpler structure.

In Structure 15, the enable signal generating means changeably sets the predetermined time width of the enable signal generated by stages.

With the above structure, since the time period of the enable signal can be finely adjusted, the gradation characteristics can be adjusted in accordance with the output characteristics of the apparatus.

In Structure 16, the plurality of recording elements are aligned in the array form of a single line or plural lines, the ratio of the exposure size of a single recording element in the aligned direction to the recording pitch in the aligned direction is 0.7 to 1.2. Herein, the exposure size does not means the size the formed image after the recording, and means the size of exposing optical image of a single recording element on the surface of the recording medium.

With the above structure, more continuous gradation characteristics can be obtained.

In Structure 17, the plurality of recording elements are aligned in the array form of a single line or plural lines, the ratio of the exposure size of a single recording element in the vertical direction with regard to the aligned direction to the recording pitch in the vertical direction with regard to the aligned direction is 0.3 to 1.0.

With the above structure, more continuous gradation characteristics can be obtained.

In Structure 18, in the case that the plurality of recording elements are aligned in the array form of a single line or plural lines, the exposure size of a single recording element in the vertical direction with regard to the aligned direction is defined as "A", the recording pitch in the vertical direction with regard to the aligned direction is defined as "B", and the ratio of the time period from the start of light emission to the completion of light emission for a single line to the recording time cycle for the single line is defined as "C", the recording is conducted so as to satisfy the following formula:

$$0.8 \leq (A/B + C) \leq 1.3$$

With the above structure, more continuous gradation characteristics can be obtained.

In Structure 19, in the time of the gradation recording conducted by stages, an interval time period between each enable signal in which the enable signal is in a rest condition is set more than 2 micro-seconds and then the recording is conducted.

With above structure, since the influence of the light emission history may be reduced by the just-before enable signal, it becomes possible to control the gradation characteristics with the time width of the enable signal. Especially, in cases where the exposure is conducted while moving, the spread of dot is widened so that unevenness caused in the time of area modulation can be reduced.

In Structure 20, shift control means is provided for conducting shift control in such a manner that shifting and stopping of the silver halide color photosensitive material is repeated in the vertical direction with regard to the aligned direction of the recording elements, and the recording is conducted with the use of the exposure more than 50 % of the time period from the start of light emission to the completion of light emission of the recording elements for a single line while the silver halide color photosensitive material is shifting on the basis of the shift control by the shift control means.

With the above structure, since the exposure is conducted while conducting the shifting, the density in the dot region can be unified and the responding ability in the gradation control can be improved.

## BRIEF DESCRIPTION OF THE DRAWINGS

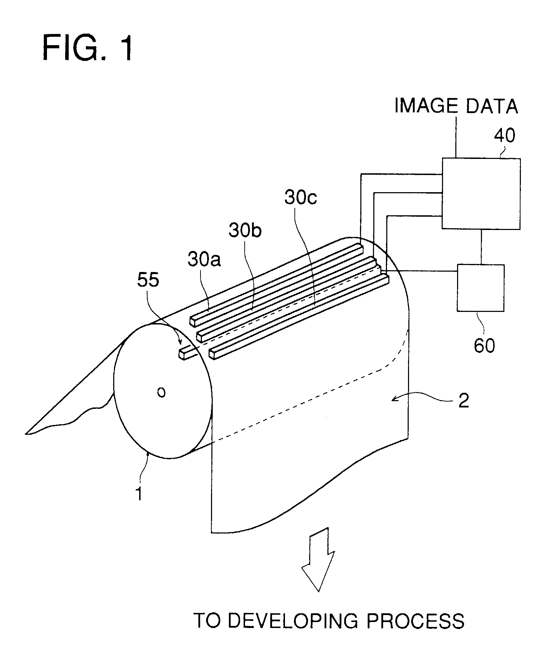

Fig. 1 is view showing an outline structure of an image forming method of one embodiment of the present invention.

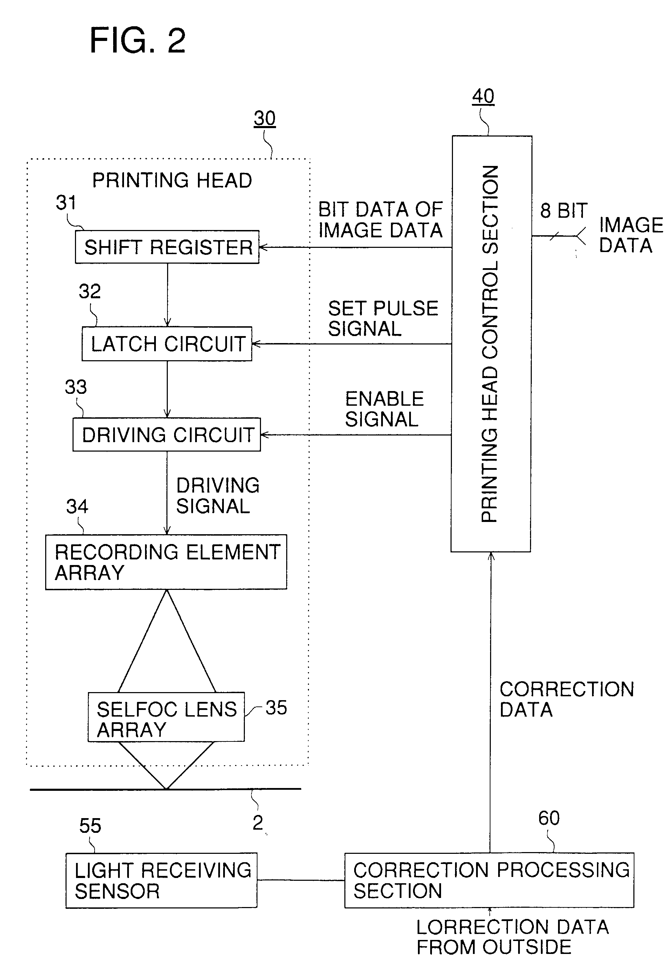

. Fig. 2 is a view explaining an operation of writing image data in a printing head of the embodiment of the present invention.

Fig. 3 is a detailed block diagram of a printing head control section of the embodiment of the present invention.

Fig. 4 is an outline block diagram of a correction data processing section of the embodiment of the present invention.

Fig. 5 is a timing chart of an output signal from the printing head control section of the embodiment of the present invention.

Fig. 6 is a view showing the size of a pixel exposed in a printing paper in the embodiment of the present invention.

Fig. 7 is a timing chart indicating an output signal from the printing head control section of the embodiment of the present invention.

Fig. 8 is a view showing density characteristics of the embodiment of the present invention.

Fig. 9 is a view showing density characteristics of the embodiment of the present invention.

Fig. 10 is a view showing density characteristics of the embodiment of the present invention.

Fig. 11 is a diagram showing a peak point in the density data accumulating region.

Fig. 12 is a diagram showing the light amount change-ratio in a single chip.

Figs. 13(a) and 13(b) are diagrams showing examples of similar characteristics.

## DETAILED DESCRIPTION OF THE PREFERRED EMBODIMENT

Hereinafter, the embodiment of the present invention will be explained with reference to the drawings. The embodiment is only one example of the present invention, and the present invention is not limited to this embodiment.

Fig. 1 is an outline view showing a structure of an image recording method. A color photographic printing paper 2 (hereinafter simply referred to printing paper) of a silver halide color photosensitive material is drawn out from a roll by a supporting drum 1 acting as a shift control means which is driven and rotated by an unillustrated conveyance driving source. When the printing paper 2 is conveyed in the arrowed direction, a red color light source printing head 30a, a green color light source printing head 30b and a blue color light source printing head 30c are subjected to an exposure control in accordance with image data by a printing head control section 40 so that required positions of the printing paper 2 are sequentially exposed for each color and a latent image of a color image is formed on the printing paper 2. After the exposure process has been completed in the above manner, the printing paper 2 is conveyed to a developing process by the supporting drum 1 in order to be subjected to the next process.

Incidentally, an array light source in which recording elements are arranged in a single line or plural lines is used for each printing head. For more detail, a LED light source which is generally used is adopted for the red color light source printing head 30, and a vacuum fluorescent printing head or Vacuum Fluorescent Print Head (hereinafter simply referred to VFPH) which is easily subjected to color separation by a color filter with a relatively high luminance and a high speed response is adopted for the green color light source printing head 30b and the blue color light source printing head 30c. As for the printing paper 2, it was explained as being in the form of a roll. However, the printing paper 2 may also be in the other form. Further, as for the shift means for the printing paper 2, the other conveying techniques may also be used.

A light receiving sensor 55 is disposed beneath the printing head through the supporting drum 1. Before the recording operation is conducted, the light receiving sensor 55 receives light from each of the printing heads 30a, 30b, 30c, converts the intensity of the light into an electronic signal with its internal photo-electric converting element, and then outputs the signal to the correction process section 60. Upon receipt of the signal, the correction process section 60 outputs correction data to correct the light emission characteristics of each of the printing heads 30a, 30b, 30c to the printing head control section 40. Based on the correction data, the printing head control section 40 regulates the light emission characteristic of each of the printing heads 30a, 30b, 30c.

Fig. 2 is a diagram explaining a writing operation of the printing head in which image data for one color component are written.

In Fig. 2, when the printing head control section 40 receives image data showing the gradation of each color component with a digital value of 8 bits, the printing head control section 40 conducts the correction process for the image data on the basis of the above correction data, converts the image data into serial digital image data corresponding in amount to one line of pixels for each recording element, generates a set pulse signal to transport bit data of the image data to a latch circuit 32 and an enable signal to control the light emitting time, and outputs to the printing head 30 for one color. The bit data of the image data means data as to a specific bit of the image data.

Initially, when data of MSB (Most Significant Bit) as the bit data of the image data corresponding in amount to one line is transmitted from the printing head control section 40 to a shift register 31 in the printing head 30, a set pulse signal is inputted in the latch circuit 32, and the data of MSB corresponding in amount to one line are latched together in synchronization with the set pulse signal.

Then, the enable signal corresponding to the gradation is inputted into a driver circuit 33, during a time period defined by the enable signal, each recording element in the recording elements which are arranged in an array form of one line or plural lines is controlled and driven so as to emit light in accordance with the latched image data. In other words, the driver circuit 33 selectively sends an enable signal to the recording elements in the recording array 34 whose latched data is "1", and causes the elements to emit light during the time period defined by the enable signal. The emitted light is focused on the printing paper 2 through a Selfoc lens array 35 and forms a latent image. In this manner, the operation is conducted sequentially for all of the 8 bits from MSB to LSB (Least Significant Bit), thereby the recording for one line is completed. Incidentally, the operation for one color was explained above, the operation for three colors is conducted in the same way of the above operation. Incidentally, the operation order for bits may be conducted from LSB to MSB or in the other order. The operation order is not limited to the above example.

VFPH which has the light emission characteristic for green component and blue component is provided with an unillustrated color separation filter for each of green and blue beneath the Selfoc lens array 35. Since the printing head control section 40 conducts the recording control in such a manner that exposure timing of each of the three sets of printing heads is delayed one after another so as to record image data transmitted for each color on the required position on the conveyed printing paper 2, the color image can be recorded properly. A yellow filter may be used as the filter for a green light source instead of a green filter. The printing head control section 40 conducts the recording control for the printing head 30 so that 50 % or more of the recording amount of one line is conducted while the printing paper 2 is shifting by the supporting drum 1, whereby the recorded image is continued between lines. As a result, the occurrence of uneven images can be avoided and smooth continuous gradation can be attained by the density modulation.

Incidentally, the LED array and VFPH are adopted in the present embodiment. However, instead of them, a combination of light emitting member and a shutter array (liquid crystal shutter array, PLZT shutter array, etc.), a laser array (LD laser array, etc.) in which lasers are aligned, may also be used in a proper combination. Further, as photosensitive material used for the exposure process, the photographic color printing paper 2 including silver chloride was used. However, if the silver halide photosensitive material is a so called low contrast recording medium with which an image density can be controlled by the area modulation, such the low contrast recording medium may be used in the present embodiment. Also, if an array suits the color sensitivity of the photosensitive material, the array may be used in the present embodiment. In the case of the color recording, a three color control in which light sources for three colors are arranged on a single printing head may also be conducted.

An LED array made of a material such as GaAlAs or GaAsP is a high light emission efficiency element in comparison with the other LED array. Specifically, an LED array which has a sharp peak in the 650 nm to 680 nm range of the emitting wavelength can selectively expose the red light sensitive layer of the silver halide photosensitive material with high efficiency. Further, since it may be possible to conduct On-Off control at high speed on the order of several nano seconds, the LED array especially suits severe exposure time control.

Since light emission is caused in a wide spectral region extending from blue light to green light by a single kind of phosphor material in VFPH, a blue sensitive layer and a green sensitive layer of the silver halide color photosensitive material can be selectively exposed with the combination of VFPH and a color filter.

Further, in VFPH using oxidized zinc phosphor (ZnO:Zn), since the light emission efficiency is relatively high and temperature change during light emission is small, the shift of the peak wavelength of the emitting light caused by the temperature change is small and the exposure efficiency for the silver halide photosensitive material which has a high wavelength selecting tendency becomes stable.

In cases where a combination of a liquid crystal shutter and a light emitting member are used as the recording elements 34, since a possibility to make the array in a two dimensional form is high, the combination is particularly suitable for the purposes of conducting trecording at a higher speed and recording the image in a larger size. Further, in cases where making two dimensional forms, it is possible to not make the total outputting speed of the image slow even if the exposure time for each element is made relatively long, and a discontinuing tendency in the gradation caused by plural times of exposure is small so that a good gradation can be obtained. Still further, since LED arrays, VFPH, a ferroelectric liquid crystal shutter has a high speed switching capability, a discontinuing tendency in the gradation caused by plural times of exposure is also small so that good gradation is obtained.

When the present embodiment is applied to a photosensitive material having a soft gradation characteristic, such as a silver halide photosensitive material, the highest efficiency can be obtained, and a real density modulated image can be obtained by the density control in a small region by the effect of the light emitting time control so that a smooth pictorial image quality can be obtained.

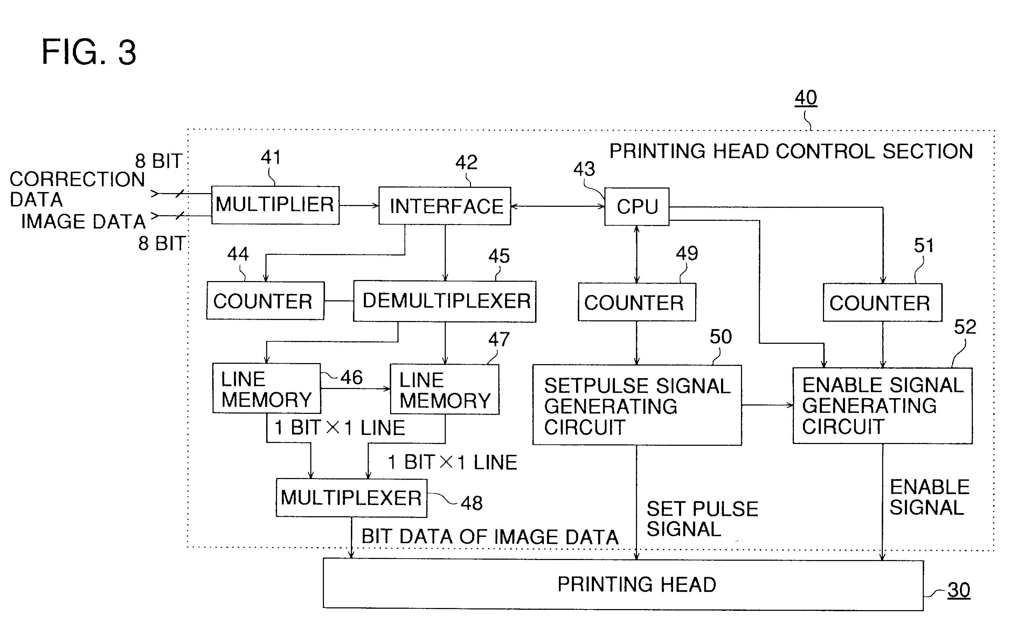

Fig. 3 shows a detailed block diagram of the printing head control section 40. Its operation will be explained as follows.

Firstly, a multiplier 41 multiplies the image data by the correction data in order to conduct the correction of the light emitting characteristic obtained in the correction process section 60 as mentioned above, then the corrected image data is outputted to an interface 42.

CPU 43 sets an initial count value to count pixels corresponding to one line in counter 44 through the interface 42 so that the counter 44 is started, and controls the demultiplexer 45 for changing the input. Upon receipt of this operation, counter 44 starts counting and outputs the count value to demultiplexer 45. Then, on the basis of the above count value, the image data (8 bits x one line) are written in a line memory 46.

When the writing operation to write the image data of the first line in the line memory has been completed, the bit data of the image data of the first line are outputted sequentially from MSB to LSB from the line memory 46 to the multiplexer 48, and then transmitted to the printing head 30. On the other hand, the output passage for the image data of the second line is changed by the demultiplexer 45 so that the image data of the second line are written in the line memory 47. In such a manner, during the time period that the bit data of the image data of the current line is transmitted to the printing head 30, the image data of the next line is subjected to the writing operation so as to be written into a line memory other than the line memory in which the image data of the current memoty is written. Since such an expansion process and writing operation are repeated, the image data of each line are continuously outputted without delays in time.

Counter 49 counts the time to transmit the bit data of the image data to the multiplexer 48 under the control of the CPU 43 and outputs a count-up signal to a set pulse signal generating circuit 50. When the transmitting operation to trasmit the bit data of the image data to the printing head 30 has been completed, the set pulse signal generating circuit 50 generates a set pulse signal and outputs it to the printing head 30, and also outputs the set pulse signal to the enable signal generating circuit 52.

On the other hand, the counter 51 counts an enable time corresponding to the density value assigned in advance for each bit of 8 bits under the control of the CPU 43 and outputs the enable signal generating circuit 52. Then, the enable signal generating circuit 52 generates an enable signal having an enable time corresponding to MSB of 8 bits representing the density value upon receipt of the generation of the set pulse signal and outputs it to the printing head 30 and to the CPU 43. Upon receipt of it, the CPU 43 controls the counter 49 so as to generate the next set pulse signal. By repeating such succesive operations, the set pulse signal, the enable signal and the bit data of the image data are sequentially outputted from MSB to LSB for each line with a timing relating to each other to the printing head 30.

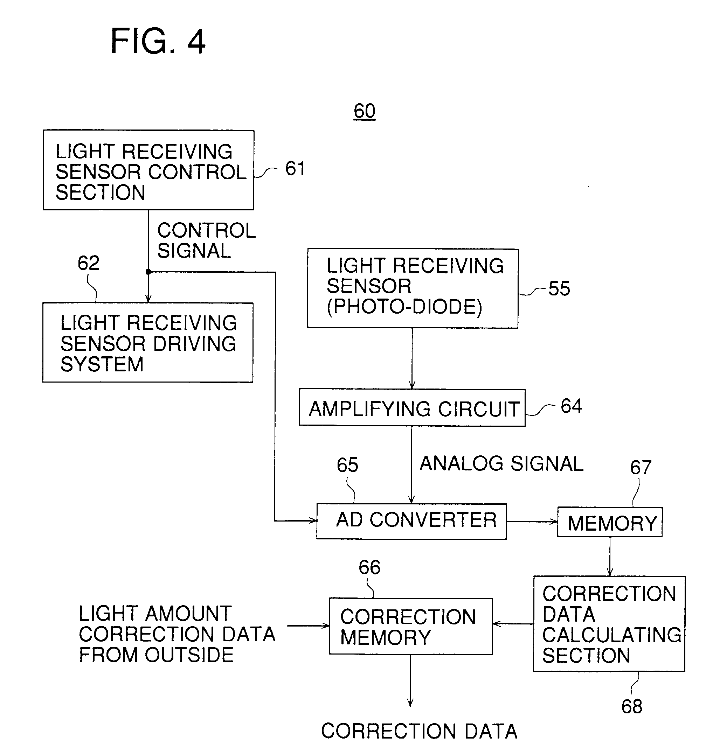

Fig. 4 shows a detailed block diagram of the correction data processing section.

A light receiving sensor driving system 62 conducts a light receiving control for a light receiving sensor 55 under the control of a light receiving sensor control section 61. That is, before the recording on the printing paper 2 is started, the light receiving sensor 55 is shifted to the image forming position of each of the three printing heads provided for each color, and conducts the light receiving operation. At this time, the supporting drum 1 is provided with a slit of a small gap through which the light receiving sensor 55 conducts the reading. The light receiving sensor 55 receives the emitting light sequentially for each color through the slit.

Analog electronic signals outputted from the light receiving sensor 55 are amplified by the amplifying circuit 64. Then, the signals are converted into digital electric signals with an A/D convertor and the digital electronic signals are stored in a memory 67. Next, an arithmetic process is applied as required so that the correction data are caluculated and are inputted and stored in a look-up table in the correction memory 66. Alternatively, the correction data may be inputted from the outside the unit and stored in the look-up table in the correction memory 66. With the look-up table, the correction data corresponding to the intensity of the receiving light is outputted.

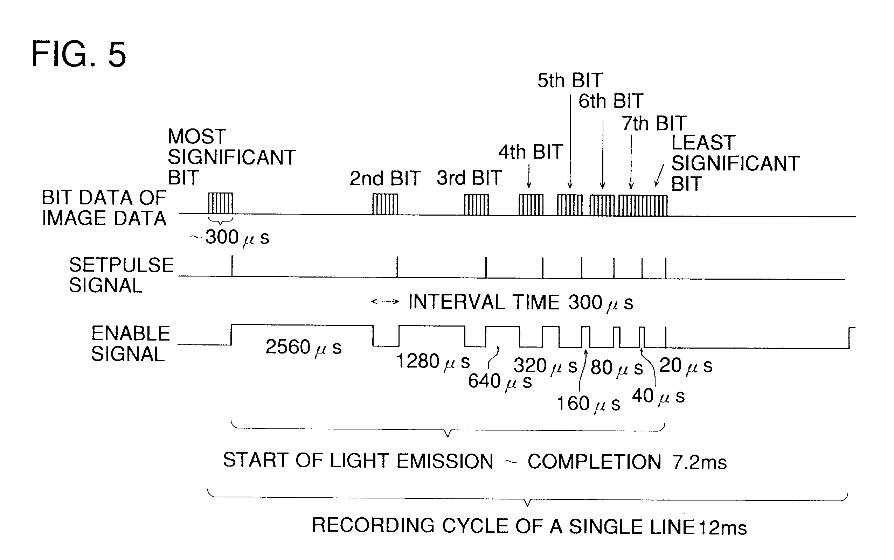

Fig. 5 shows a timing chart of the output signal outputted from the printing head control section 40 to the printing head 30b. Among the image data which has been subjected to an expansion process so as to form a density value structured in 8 bits for each pixel, firstly, MSB corresponding to one line are outputted over 300 $\mu$sec and are transmitted to the printing head 30b, thereafter the set pulse signals and the enable signals are outputted. A time interval between the enable signals is set at 300 $\mu$sec.

At this time, the time period of the enable signal of each color is as follows:

|         | B        | G        | R        |
|---------|----------|----------|----------|
| MSB     | 1536 $\mu$s | 2560 $\mu$s | 5120 $\mu$s |
| 2nd bit | 768 $\mu$s  | 1280 $\mu$s | 2560 $\mu$s |
| 3rd bit | 384 $\mu$s  | 640 $\mu$s  | 1280 $\mu$s |
| 4th bit | 192 $\mu$s  | 320 $\mu$s  | 640 $\mu$s  |
| 5th bit | 96 $\mu$s   | 160 $\mu$s  | 320 $\mu$s  |

(continued)

| | B | G | R |
|---|---|---|---|
| 6th bit | 48 μs | 80 μs | 160 μs |
| 7th bit | 24 μs | 40 μs | 80 μs |
| LSB | 12 μs | 20 μs | 40 μs |

In this case, when the latch data or the bit values for all of the enable signals from MSB to LSB for an element are "1", the emitting light shows the highest density. The same control is conducted for the printing heads 30a and 30c.

In the above manner, since the enable signal for each bit of blue, green and red can be set to conform with the sensitivity and the gradation characteristics of each sensitive layer of the silver halide color photosensitive material, each recording element may be driven individualy a plural number of times in the manner of On-Off recording, whereby a continuous gradation image with a high resolution can be recorded on a silver halide color photosensitive material with the utilization of the characteristic of the silver halide color photosensitive material without causing the apparatus to be complicated and at high cost.

The difference between the high sensitivity and the low sensitivity increases due to the intermittent exposure effect of the silver halide photosensitive material, resulting in that a color cross talk in exposure time can be decreased and the color separation can be enhanced. For example, speaking of the high density region of the color printing paper, since blue is slightly exposed by the green exposure, yellow is mixed in magenta after development, thereby causing the color cross talk with yellow. However, in the present invention, since On-Off exposure is conducted plural times, the color cross talk with yellow by the blue sensitive layer can be reduced, thereby obtaining a higher image quality.

Further, with the high contrast recording medium by the electrophotgraphy or a so-called silver developing technique such as a monochrome photosensitive material in a silver halide photosensitive material with which a silver image is formed, since the spreading of a pixel is small, the image is formed with an area modulation tendency, resulting in that an iregularity in a unit of a pixel is observed in the image and the obtained image is unacceptable. Further, since a pixel does not spread and its shape is distinct, the positional deviation among yellow, magenta and cyan pixels causes Moire patterns, whereby the image quality tends to be degraded. As a consequence, it is necessary to precisely register the position of the pixels for each color.

In contrast, in the present invention, with the so-called color developing method of forming a dye image by the development such as a silver halide color photosensitive material, the spread of a pixel is widened by plural On-Off exposure, the density in each pixel region tends to be unified, and the irregularity in unit of a pixel decreases, thereby obtaining a higher quality image. Further, since it is not necessary to use a complicated apparatus to conduct a high precision positioning, the cost does not increase. In this way, with the present embodiment, a continuous gradation recording with a higher resolution may be conducted with the utilization of the exposure characteristics of the printing paper 2 without causing a complicated apparatus and a high cost.

An example in which the image output was conducted with the present apparatus will be indicated hereinafter.

(Inventive Example 1-1)

The correction was conducted in the following procedure in the LED array which was the red light source printing head 30a and an image for the evaluation was outputted. Incidentally, the following two types of images were used as the image for the evaluation.

Image A : uniform density solid images classified into 5 stages of low density to middle density.

Image B : an image including a relatively large figure of a person on a backgroud of gray gradation.

1) All recording elements were controlled to emit light on the basis of the image data with which the density value on the printing paper 2 was expected to be approximately 1.0, the printing paper 2 was exposed with the lights and developed so that images for the correction process were obtained.

2) The image density data were obtained in such a manner that the density measurement was conducted in a printing head 30a-aligned direction on the image for the correction process obtained by the above operation by a density measuring device (Konica Microdensitometer PDM-5 Type BR : manufactured by Konica Corporation).

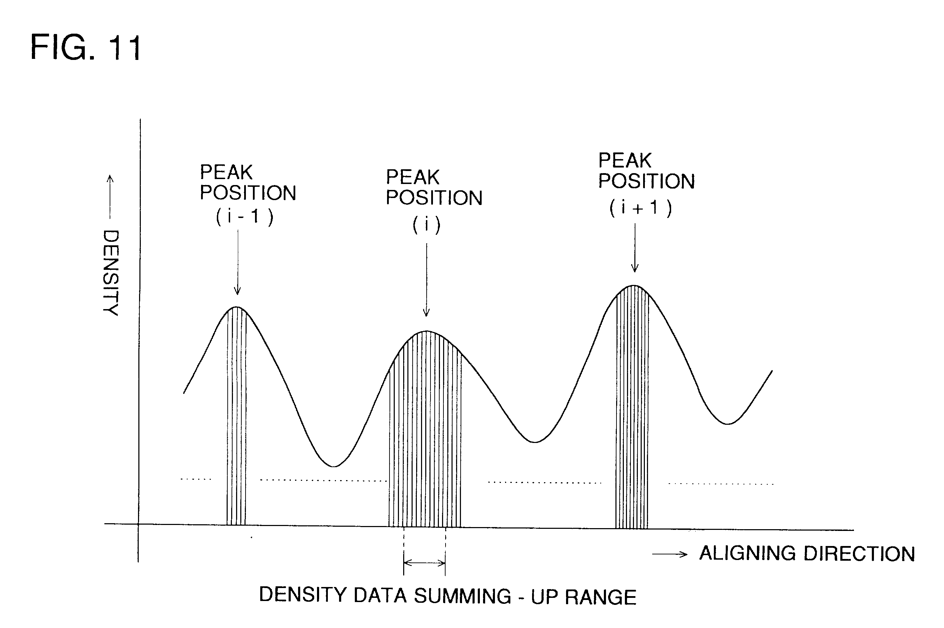

3) Fig. 11 is an example of the density data obtained in the above manner. The measured density data have a form in which a peak indicates for the position of each recording element. On the basis of this form, the density peak position (i) for each of all recording elements was detected.

4) Several data (in this example 5 data) located before and after a peak point (i) obtained the above manner were summed up together with the respective peak density data so that the summed-up density data (Di) were calculated. The same calculation was conducted for all recording elements.

5) A correction value (Ci) was calculated from the density ratio of a reference summed-up density (Do: the average value of all summed-up density data) to the obtained summed-up density data (Di), and the correction value was stored in the correction memory 66: Ci = Do / Di

6) The image data to be evaluated were multiplied with the correction data by the multiplier 41, and the printing paper 2 was exposed with the corrected image data.

7) The exposed printing paper was subjected to a predetermined developing process, whereby the image data to be evaluated was obtained.

(Inventive Example 1-2)

The correction was conducted with the following procedure in the LED array which was the red light source printing head 30a and an image for the evaluation was outputted. Incidentally, the image for the evaluation was the same as that in Inventive Example 1-1.

1) All recording elements were controlled to emit light on the basis of a plurality of the image data differing in density value, the printing paper 2 was exposed with the light and developed so that images for the correction process were obtained.

2) The density measurement was conducted in the same manner of Inventive Example 1-1 for the image for the correction process obtained by the above operation. As a result, a plurality of summed-up density differing in the image data value were obtained for each recording element.

3) A relationship between the image data value (proportional to the light amount of the recording element) and the density value was obtained for all recording elements. The image data value in the time of the specific target density (for example: density 1.0) was calculated as the light amount (Pi) from the above relationship.

4) A correction value (Ci) was calculated from the light amount ratio of a reference light amount (Po: the average value of all light amount) to the obtained light amount (Pi).

$$Ci = Po / Pi$$

5) The correction was conducted in the same manner as Inventive Example 1-1 on the basis of the obtained correction value (Ci), whereby the image data to be evaluated was obtained.

(Comparative Example 1-1)

The correction was conducted in the following procedure in the LED array which was the red light source printing head 30a and an image for the evaluation was outputted. Incidentally, the image for the evaluation was the same as that in Inventive Example 1-1.

1) On the condition that one recording element (i-th element) was emitting a light, the luminance (Ei) was measured by the light receiving sensor 55.

2) The above measurement was conducted sequentially for each element by the control of the light receiving sensor driving system 61 on the basis of the light receiving sensor control section 61.

3) A correction value (Ci) was calculated from the luminance ratio of the reference luminance (Eo) to the obtained luminance (Ei) in the correction data calculating section 68, and the correction value was stored in the correction memory 66.

$$Ci = Eo / Ei$$

4) The image data to be evaluated were multiplied with the correction data by the multiplier 41, and the printing paper 2 was exposed with the corrected image data.

5) The exposed printing paper was subjected to the predetermined developing process, whereby the image data to be evaluated was obtained.

(Comparative Example 1-2)

The correction was conducted in the following procedure in the LED array which was the red light source printing head 30a and an image for the evaluation was outputted. Incidentally, the image for the evaluation was the same as that for Inventive Example 1-1.

1) In cases where one recording element (i-th element) was controlled to emit a light with the specific image data value, the light was emitted plural times in accordance with the image data value as shown in the timing chart in the Fig. 5. Under such conditions, the summed-up light amount (Ii) of all emitted lights was measured by the light receiving sensor 55.

2) The above measurement was conducted sequentially for each element by the control of the light receiving sensor driving system 61 on the basis of the light receiving sensor control section 61.

3) A correction value (Ci) was calculated from the luminance ratio of a reference light amount (Io) to the obtained light amount (Ei) in the correction data calculating section 68, and the correction value was stored in the correction memory 66.

$$Ci = Io \, / \, Ii$$

(the average light amount of all measured elements was used as Io)

4) The correction was conducted in the same manner of Comparative Example 1-1 on the basis of the obtained correction value (Ci), whereby the image data to be evaluated was outputted.

For the obtained image, a visual evaluation was conducted in terms of the density unevenness for Image A and in terms of both the density unevenness and the gradation for Image B.

As a result, with regard to Image A to be evaluated, Inventive Example 1-1 showed less unevenness and a uniform image in terms of density in comparison with Comparative Example 1-1 and Comparative Example 1-2. Further, with regard to Image B, Inventive Example 1-1 showed a higher quality image which had less unevenness and better continuous gradation in gradation of the background and in the person's skin in comparison with Comparative Example 1-1 and Comparative Example 1-2.

With regard to Image A to be evaluated, Inventive Example 1-2 showed much less unevenness and a much more uniform image with an improvement in accuracy of the correction in comparison with Inventive Example 1-1. Further, with regard to Image B, Inventive Example 1-2 showed a higher quality image with much less unevenness and better continuous gradation in comparison with Inventive Example 1-1.

In Inventive Examples 1-1 and 1-2, as the density measuring device, Konica Microdensitometer PDM-5 Type BR, manufactured by Konica Corporation was used. Instead of it, various types of scanners such as a flat bed scanner and a commercial drum scanner were used to measure the density. The same evaluation technique of Inventive Examples 1-1 and 1-2 was conducted for the measured density. As a result, the same effects were obtained.

In Inventive Examples 1-1 and 1-2, as the reference summed-up density (Do) and the reference summed-up light amount (Po), the average value of all recording elements was used. Instead of it, the maximum value or the minimum value among the values of all recording elements was used and the same evaluation was conducted. As a result, the same effects were obtained.

In Inventive Examples 1-1 and 1-2, the image for the correction process and the image for the evaluation were formed on printing paper (papers including a silver halide photosensitive material). As the silver halide photosensitive material, a transparent or a semitransparent printing paper, a negative film, a reversal film, a reversal paper, a monochrome photosensitive material, and a photosensitive material having a self-processing solution such as an instant photosensitive material may be used and the same effects can be obtained.

Further, a photosensitive material on which the image for the correction process is formed may be different from a photosensitive material on which an image is actually formed. With regard to a point that the correction including the characteristic of the photosensitive material can be conducted, it is preferable to use the same photosensitive material.

Still further, when necessary, the correction is conducted with the use of the obtained correction value, then the image for the correction process is outputted. The obtaining operation to obtain the correction value in the same manner may be repeated.

(Inventive Example 2-1)

The correction was conducted in the following procedure in the LED array which was the red light source printing head 30a and the images A and B for the evaluation were outputted.

1) On condition that the two neighboring recording elements (ith and i+1th elements) are emitting light respectively, the light receiving element 55 measured the total luminance (E2i) of the two recording elements. A light receiving sensor large enough to measure the luminance of the two elements simultaneously was used.

2) The above measurement was conducted for each element sequentially under the control of the light receiving sensor driving system 61 on the basis of the light receiving sensor control section 61.

3) In the correction data calculating section 68, the following averaging process was conducted for the measurement value (E2i) and the luminance (Ei) was obtained for each element.

$$Ei = (E2i + E2i+1)/4$$

4) On the basis of the obtained luminance (Ei), the correction was conducted in the same way as Inventive Example 1-1, and the image for the evaluation was outputted.

For the obtained image, the same evaluation of Inventive Example 1-1 was conducted.

As a result, with regard to Image A for the evaluation, Inventive Example 2-1 showed less unevenness in terms of large-pitch unevenness and a uniform image in each density in comparison with Comparative Example 1-1. Further, with regard to Image B, Inventive Example 2-1 showed a higher quality image with less unevenness in terms of large-pitch unevenness and better continuous gradation in gradation of the background and in the skin of the person in comparison with Comparative Example 1-1.

In Inventive Example 2-1, while a single set of sensors was being moved along the array, the measurement for each element was conducted. However, if plural sets of sensors are used, the same effects can be obtained. Further, if a sensor array such as a linear CCD is used and the measurement is conducted without moving the sensor, the same effects can be obtained.

Further, the luminance (Ei) of each element was obtained by the averaging process, the calculating process is not limited to this example. If the luminance (Ei) of each element is obtained by the calculating process such as a center value, the same effects can be obtained.

Still further, the simultaneously emitting light of the two elements was indicated as one example. A number of the measurement is not limited to this example. If the plural elements emit light simultaneously, the same effects can be obtained by obtaining the luminance (Ei) for each element with an appropriate calculating process.

(Inventive Example 2-2)

The correction was conducted in the following procedure in the LED array which was the red light source printing head 30a and images A and B for the evaluation were outputted.

1) In an element chip (128 pixel in this embodiment) constructing LED array, the luminance (E1(j), E2(j), E3(j), E4(j)) were measured by the light receiving sensor 55 under the conditions indicated below.
   (j: element No. in the chip)

E1(j) luminance measured on condition that a single recording element was emitting light.

E2(j) the total luminance of two neighboring recording elements (jth and j+1th elements) were measured on condition that the two neighboring redording elements were emitting light.

E3(j) the total luminance of three neighboring recording elements (j-1th, jth and j+1th elements) were measured on condition that the three neighboring redording elements were emitting light.

E4(j) the total luminance of four neighboring recording elements (j-1th, jth, j+1th and j+2th elements) were measured on condition that the four neighboring recording elements were emitting light.

A light receiving sensor large enough to measure the luminance of the four elements simultaneously was used.

2) The above measurement was conducted for each element sequentially under control of the light receiving sensor driving system 61 on the basis of the light receiving sensor control section 61.

3) In the correction data calculating section 68, the calculating process was conducted on the basis of the measurement values (E1(j), E2(j), E3(j), E4(j)), the luminance (E128(j)) of a single recording element was obtained on condition that all elements in the chip were emitting light simultaneously.

In this example, the following calculating processes were conducted:

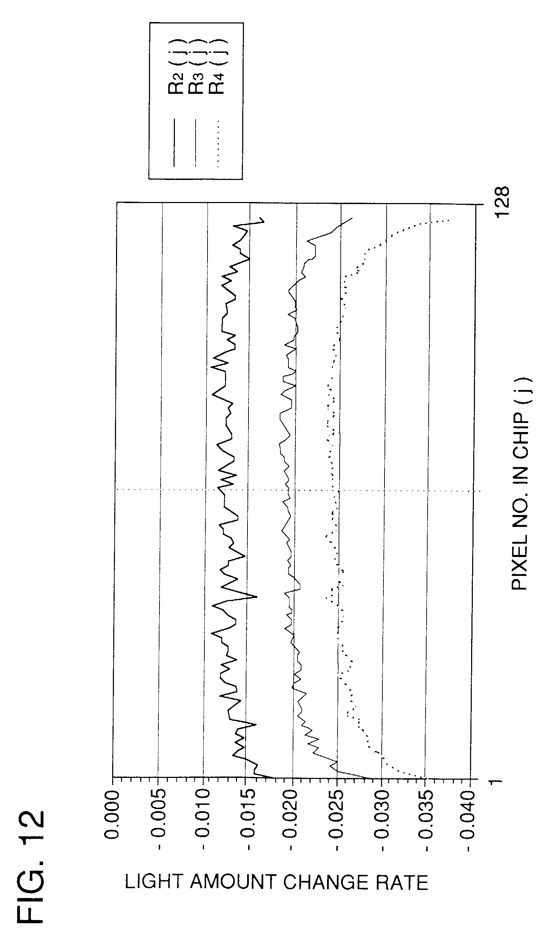

E1(j) was assumed as the reference and light amount change rate R2(j), R3(j), R4(j) were obtained as shown in Fig. 12.

$$R2(j) = (E2(j)-(E1(j)+E1(j+1)))/(E1(j)+E1(j+1))$$

$$R3(j) = (E3(j)-(E1(j-1)+E1(j)+E1(j+1)))/(E1(j-1)+E1(j) +E1(j+1))$$

$$R4(j) = (E4(j)-(E1(j-1)+E1(j)+E1(j+1)+E1(j+2)))/(E1(j-1)+E1(j)+E1(j+1)+E1(j+2))$$

Each of light amount change rates R2(i), R3(i) and R4(i) were subjected to the regression process with a second order function so as to obtain A(2), A(3) and A(4).

$$R2(X) = A(2)xX^2+B(2)xX+C(2)$$

$$R3(X) = A(3)xX^2+B(3)xX+C(3)$$

$$R4(X) = A(4)xX^2+B(4)xX+C(4)$$

The regression process was conducted with a natural logarithm function $(A(y) = dxln(y)+h)$ so as to obtain A (128).

On the condition that all elements in the chip were emitting light, the light amount change rate R128(X) = A (128)xX**2+B(128)xX+C(128) and its inclination S(128) = 2xA(128)xX+B(128) were assumed to be 0(zero) around the center (X=63), and B(128) and C(128) were thus obtained.

The correction value (C(i)) for the deviation among pixels were calculated with the use of the obtained light amount change rate R128(X) = A(128)xX$^2$+B (128)xX+C(128).

(j: element No. in the chip)

j = 1 to 32      C(i) = 1/(E1(j)xR128k(32))

j = 33 to 96      C(i) = 1/(E1(j)xR128k(j))

j = 97 to 128      C(i) = 1/(E1(j)xR128k(97))

5) The above correction value was obtained for each chip, whereby the correction value (Ci) was obtained for each element and stored in the correction memory 66.

6) On the basis of the obtained correction value (Ci), the correction was conducted in the same way of Comparative Example 1-1, and the image for the evaluation was outputted.

For the obtained image, the same evaluation of Inventive Example 1-1 was conducted.

As a result, with regard to Image A for the evaluation, Inventive Example 2-2 showed less unevenness even in terms of small-pitch unevenness and a more uniform image in each density in comparison with Inventive Example 2-1. Further, with regard to Image B, Inventive Example 2-1 showed a higher quality image with less unevenness in terms of smaller-pitch unevenness and good continuous gradation in the gradation of the background and in the skin of the person in comparison with Inventive Example 2-1.

In Inventive Example 2-2, with the calculating process, the luminance of a single recording element was obtained on the condition that all elements in the chip were emitting light simultaneously. However, the luminance of a single recording element may be obtained on a similar condition of an actually image-outputting condition that plural elemetns in the chip are emitting a light simultaneously. As a result, the same effects can be obtained.

Further, the type of the calculating process is not limited to above example. With a proper calculating process in accordance with the characteristic of a used-array light source, the luminance of a single recording element may be obtained on condition that plural elemetns in the chip are emitting a light simultaneously. whereby the same effects can be obtained. For example, for the portion to be subjected to the regression process with a second order function or a natural logarithm function, a proper function may be used in accordance with the characteristic of the used array light source.

Still further, the correction value (Ci) for each element was obtained by subjecting the measurement value obtained on condition that No. 2, 3, 4 neighboring elements were emitting a light simultaneously to the calculating process with the use of the measurement value obtained on the condition that a single element was emitting light. However, by obtaining the correction value (Ci) for each element by subjecting the mesurement value obtained on the condition that plural elements are emitting light simultaneously to the calculating process with the use of the measurement value obtained on the condition that a single element was emitting light, the same effects can be obtained.

(Inventive Example 3)

The correction was conducted in the following procedure in VFPH in which yellow filter being the green light source printing head 30b was arranged, and images A and B for the evaluation were outputted.

1) On condition that all recording elements were emitting light, the light receiving element 55 measured the luminance (Ei) of a single recording element (ith element). The light receiving element was sheltered with the aperture so as not to receive a light from the other element and a sensor capable of measuring only a light from a pixel to be measured was used.
2) The above measurement was conducted for each element sequentially under control of the light receiving sensor driving system 61 on the basis of the light receiving sensor control section 61.
3) On the basis of the obtained luminance (Ei), the correction was conducted in the same way as Comparative Example 1-1, and the image for the evaluation was outputted.

For the obtained image, the same evaluation of Inventive Example 1-1 was conducted.

(Comparative Example 3)

The correction was conducted in the following procedure in VFPH in which yellow filter being the green light source printing head 30b was arranged, and images A and B for the evaluation were outputted.

1) On condition that only a single element was emitting light, the light receiving element 55 measured the luminance (Ei).
2) The above measurement was conducted for each element sequentially under control of the light receiving sensor driving system 61 on the basis of the light receiving sensor control section 61.
3) On the basis of the obtained luminance (Ei), the correction was conducted in the same way as Comparative Example 1-1, and the image for the evaluation was outputted.

As a result, with regard to both Image A and Image B for the evaluation, Inventive Example 3 showed a high quality image which was less unevenness, uniform and good continuous gradation in comparison with Comparative Example 3.

(Inventive Example 4-1)

The correction was conducted in the following procedure in VFPH in which an LED array being a red light source printing head 30a and a yellow filter being the green light source printing head 30b were arranged and in VFPH in which a blue filter being the blue light source printing head 30c was arranged, and the image B for the evaluation was outputted. The correction was conducted for the printing heads 30a, 30b and 30c in the same way as Inventive Example 1-2, and the image for the evaluation was outputted.

(Comparative Example 4-1)

The correction was conducted for printing heads 30a, 30b and 30c in the same way as Comparative Example 1-2, and the image for the evaluation was outputted.
The visual evaluation was conducted for the obtained images in terms of density unevenness and gradation.
As a result, in comparison with Comparative Example 4-1, Inventive Example 4-1 showed a high quality image which had less unevenness and better continuous gradation in gradation of the background and in the skin of the person.

(Inventive Example 4-2)

The correction was conducted in the following procedure in VFPH in which an LED array being a red light source printing head 30a and a yellow filter being the green light source printing head 30b were arranged and in VFPH in which a blue filter being the blue light source printing head 30c was arranged, and the image B for the evaluation was outputted. The correction was conducted for the printing head 30a in the same way of Inventive Example 3, for the printing heads 30b and 30c in the same way of Inventive Example 2-2, and the image for the evaluation was outputted.

(Comparative Example 4-2)

The correction was conducted for printing heads 30a, 30b and 30c in the same way as Comparative Example 2-2, and the image for the evaluation was outputted.

The visual evaluation was conducted for the obtained images in terms of density unevenness and gradation.

As a result, in comparison with Comparative Example 4-2, Inventive Example 4-2 showed a higher quality image which was less unevenness and better continuous gradation in gradation of the background and in the skin of the person.

In Inventive Examples 4-1 and 4-2, the density measurement and the luminance measurement were taken as examples, the combination of the density measurement and the luminance measurement may be used. Further, the density measuring means and the luminance measuring means may or my not be incorporated into the image forming apparatus.

In the above Examples, the correction process was conducted by multiplying the correction value. However, the correcting method is not limited to this example. Correction by addition, subtraction and dividing may obtain the same result.

In the above Examples, the arrays in which the recording elements were aligned in a single line was used. However, with an array in which the recording elements are arranged in plural lines, if the exposur control is conducted so as to take proper timing between the image forming position of the printing head and the recording position on the photosensitive material, the same effects can be obtained.

In the above Examples, as means for obtaining the correction value, an example using an array to be corrected was used. However, as another example, in the event that the deviation of each recording element in the array in terms of light emission characteristics shows approximately the same characteristics in the same type of array, the correction value was obtained in advance with the use of another array of the same type, and then the correction may be conducted with the use of the correction value. By this way, the array to be corrected may be different from the array with which the correction value is obtained.

Incidentally, in the present embodiment, the enable signals were set in accordance with the weight of each bit at the time that the image data are represent by a binary value with the use of a binary value type light source. However, with the use of the multi value type light source, the enable signal may be set in accordance with it. For example, a technique in which an enable signal of double time exposure is set for each recording element with a light source capable of controlling 16 levels (4 bits) so that the gradation can be controlled at 256 levels may be considered. Further, an appropriate enable signal may be set with the use of a light source with which the luminance of the emitting light can be changed in addition to a light emtting time period, as the multi-value type light source.

In this embodiment, since the interval between the enable signals is set not smaller than 2 μs, the influence of the history of the light emission caused by the previous enable signal can be reduced, the gradation characteristics can be controlled by the time period of the enable signal.

In case that the interval time is shorter than 2 μs, the physical condition of the recording element or the photosensitive material between the previous light emission and the next light emission does not follow completely to On-Off operation due to its characteristics. As a result, the above physical condition becomes closer to the condition that light is continuously emitted, a stand-up pattern of the emitting light of the recording element may differ from that of ordinary cases due to the influence of the physical change (including a change in temperature) caused by the previous ligh emission, or there may be fear that the fluctuation in the uncontrolabe exposure effect may appear. In the case that the interval time is not shorter than 2 μs, the above influence becomes extremely small.

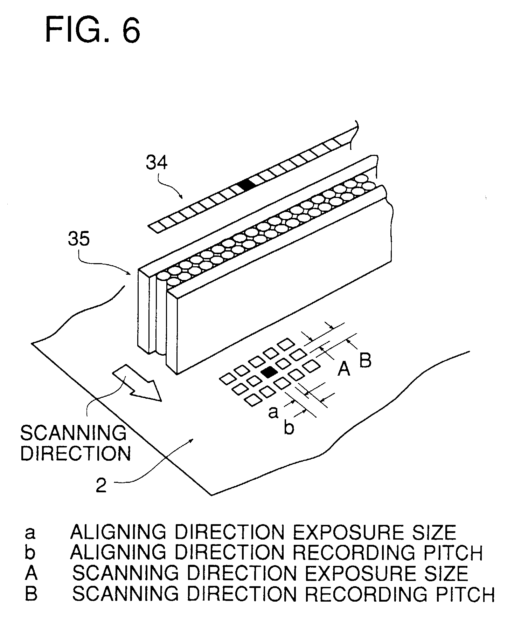

Fig. 6 is a view showing the size of pixels to be exposed on printing paper.

Light emitted from each element of the recording element array 34 is focused on the printing paper 2 through a Selfoc lens array 35. Now, with respect to the arranging direction of the recording element array 34, the exposure size of each pixel is defined as "a" and the recording pitch is defined "b". On the other hand, with respect to the vertical direction (a scanning direction), the exposure size of each pixel is defined as "A" and the recording pitch is "B". In condition of the above definition, an experiment was conducted in order to investigate the influence on the image quality by the exposure size and the recording pitch. A correction amount in the exposure amount of each recording element was obtained in the mannner of the Inventive Examples 1-1 through 4-2.

Initially, the exposure size and the recording pitch of each recording element array 34 was set as indicated below, and a wedge pattern with the gradation of 0 to 255 was exposed and outputted for each color using the method explained in Fig. 5.

|  |  | Red | Green | Blue |
|---|---|---|---|---|
| Arranging Direction | Exposure Size (a) | 55 | 50 | 50 |
|  | Recording Pitch (b) | 62.5 | 62.5 | 62.5 |
| Scanning Direction | Exposure Size (A) | 35 | 35 | 35 |
|  | Recording PItch (B) | 62.5 | 62.5 | 62.5 |
| (unit: μm) | | | | |

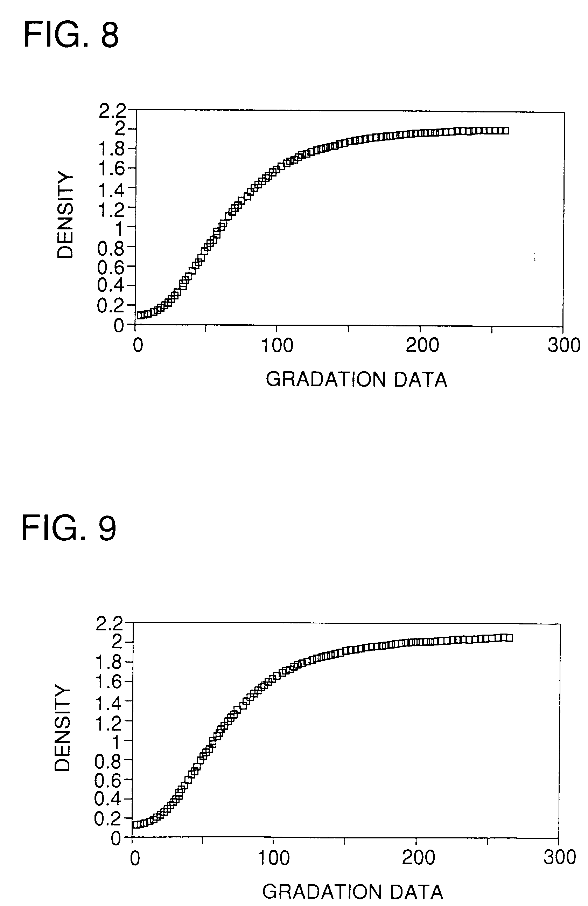

As a result, as shown in Fig. 8, with regard to the wedge of magenta by the green exposure, the wedge of cyan by the red exposure and the wedge of yellow by the blue exposure, the test result that the density characteristics were equal and that smooth continuous gradation was reproduced were respectively obtained.

Further, the exposure size and the recording pitch in relation to the arranging direction were changed as indicated below and the exposure size and the recording pitch in relation to the scanning direction were set to the same conditions as above.

|  |  | Red | Green | Blue |
|---|---|---|---|---|
| Arranging Direction | Exposure Size (a) | 40 | 35 | 35 |
|  | Recording Pitch (b) | 62.5 | 62.5 | 62.5 |
| (Unit:μm) | | | | |

In this case, discontinuous gradation was observed in low density portions and maximum saturated density became a slightly lower density than solid black due to the presence of the irregular white.

Further, the exposure size and the recording pitch in relation to the arranging direction were changed as indicated below and the exposure size and the recording pitch in relation to the scanning direction were set to the same condition as above.

|  |  | Red | Green | Blue |
|---|---|---|---|---|
| Arranging Direction | Exposure Size (a) | 82 | 82 | 82 |
|  | Recording Pitch (b) | 62.5 | 62.5 | 62.5 |
| (Unit:μm) | | | | |

In this case, the area exposed by a single element became large, resulting in the test result that depicting capability for fine patterns was lowered and sharpness was also lowered.

Still further, the exposure size and the recording pitch were changed as indicated below:

|  |  | Red | Green | Blue |
|---|---|---|---|---|
| Arranging Direction | Exposure Size (a) | 55 | 50 | 50 |
|  | Recording Pitch (b) | 62.5 | 62.5 | 62.5 |
| Scanning Direction | Exposure Size (A) | 15 | 12 | 12 |
|  | Recording Pitch (B) | 62.5 | 62.5 | 62.5 |
| (unit: μm) | | | | |

In this case, the irregular white occured in the high density portion, resulting in the test result that the maximum saturated density was slightly lowered.

Still further, the exposure size and the recording pitch were changed as indicated below:

|  |  | Red | Green | Blue |
|---|---|---|---|---|
| Arranging Direction | Exposure Size (a) | 55 | 50 | 50 |
|  | Recording Pitch (b) | 62.5 | 62.5 | 62.5 |

(continued)

| | | Red | Green | Blue |
|---|---|---|---|---|
| Scanning Direction | Exposure Size (A) | 75 | 75 | 75 |
| | Recording Pitch (B) | 62.5 | 62.5 | 62.5 |
| (unit: μm) | | | | |

In this case, overlapping among pixels was caused, resulting in the test result that the visual density increased slightly when On-Off recording was repeated for each line.

As can be seen from the above test results, when the ratio of the exposure size in the recording element arranging direction to the recording pitch in the recording element arranging direcion is in the range of 0.7 to 1.2, and the ratio of the exposure size in the vertical direction in the recording element arrangement to the recording pitch in the vertical direction is in the range of 0.3 to 1.0, continuous gradation characteristics is obtained.

Further, the exposure size and the recording pitch were set as indicated below:

| | | Red | Green | Blue |
|---|---|---|---|---|
| Arranging Direction | Exposure Size (a) | 55 | 50 | 50 |
| | Recording Pitch (b) | 62.5 | 62.5 | 62.5 |
| Scanning Direction | Exposure Size (A) | 35 | 35 | 35 |
| | Recording Pitch (B) | 62.5 | 62.5 | 62.5 |
| (unit: μm) | | | | |

On the above condition, the experiment was conducted in such a manner that the ratio C of the time period from the starting of the light emission to the ending of the light emission for one line to the recording time cycle for the one line was changed to 4 cases as indicated below:

(a) C = 0.18, (b) C = 0.3, (c) C = 0.68, and (d) C = 0.8

The following test results were obtained:

In the case of (a), irregular white occured in a high density portion and the maximum saturated density was slightly lowered. In the case of (b), the depicting capability for fine patters were lowered. On the other hand, in the cases of (c) and (d), a smooth continuous gradation was obtained without the above problems.

As can be seen from the above results, with the recording conducted so as to satisfy the relationship of $0.8 \leq (A/B + C) \leq 1.3$, continuous gradation characteristics could were obtained.

Moreover, an enable signal was changed in accordance with formula $(2^nT+t)$ in the generating section of the enable signal for each color, wherein "n" is either 0, 1, 2, ...or 7 and represents bit No. of a digital value in the case that the time period of the enable signal was converted into a digital value in accordance with the gradation of the image data, "T" is a unit of time, and "t" is a time constant of either positive or negative value.

| | t=3 | t=5 | t=8 |
|---|---|---|---|
| | B | G | R |
| MSB | 1539 | 2565 | 5128 |
| 2nd bit | 771 | 1285 | 2568 |
| 3rd bit | 387 | 645 | 1288 |
| 4th bit | 195 | 325 | 648 |
| 5th bit | 99 | 165 | 328 |
| 6th bit | 51 | 85 | 168 |
| 7th bit | 27 | 45 | 88 |
| LSB | 15 | 25 | 48 |
| (Unit: μs) | | | |

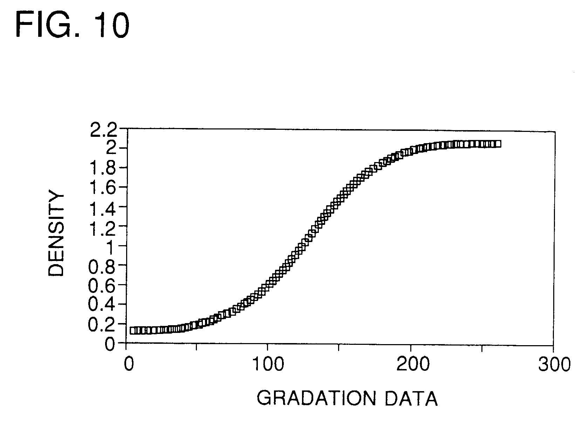

In this case, since the time period of the enable signal could be adjusted individually for each signal for each count value as shown with the wedge density characteristics of magenta by the green exposure in Fig. 9, each measuring point could be made continuous or equal so that smoother gradation recording could be conducted. Incidentally, with regard to the cyan wedge by the red exposure and the yellow wedge by the blue exposure, the same results as above were obtained.

As indicated above, in a conventional technique, a neutral color balance was slightly changed depending on the density due to the discontinuity in gradation depending on the responding characteristics of the recording element and the characteristics of the photosensitive material. However, in the embodiment of the present invention, the gradation becomes continuous and smooth gradation can be obtained, resulting in neutral ability being improved and the image quality being enhanced.

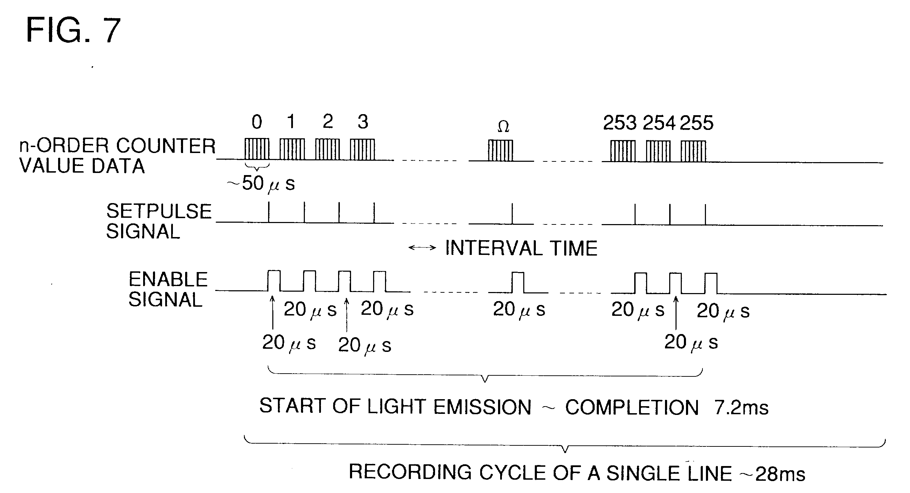

Fig. 7 is a timing chart showing another embodiment for the output signal from the printing head controlling section 40.

In this emodiment, there is provided a "n" order cunter (for example "n" = 256 in the case of 256 gradation) to drive the recording element by the number of times in accordance with the density of each pixel. The count value is compared with the density value of each pixel. When the density value is larger, "1" signal is transmitted to shift register 31 so that the driving signal is made in its active condition during that time. On the other hand, when the density is smaller, "0" signal is transmitted and the active condition is ended so that only the driving signal corresponding to the density of the pixel becomes an allowable condition. Then, the light emission control is conducted in such a way that a unit time during which the driving signal becomes active for each time is 12 $\mu$s for blue, 20 $\mu$s for green, and 40 $\mu$s for red. In other words, in the case of 256 gradations, the gradation is depicted by generating the enable signal 256 times for each pixel. With this technique, the test result that the same wedge density characteristics of magenta by the red exposure as shown in Fig. 8 could be obtained was acknowledged. Incidentally, with regard to the cyan wedge by the red exposure and the yellow wedge by the blue exposure, the same results were be obtained.

In this way, according to this embodiment, it is not necessary to set an enable signal for each bit, and good gradation can be obtained with rather simple construction.

Further, in cases that a generating period of the enable signal is changed for each color in accordance with a count value of the "n" order counter in the manner indicated below, the gradation levels in the low density become continuous. As a result, test results in which smooth continuous gradation can be reproduced as indicated with the magenta wedge density characteristics by the green exposure in Fig. 10 was obtained.

| For green Counter value | Period |
|---|---|
| 0 | $1 \times 14.5 \ \mu s$ |
| 1 | $(10^{0.01}-1) \times 14.5 \ \mu s$ |
| 2 | $(10^{0.02}-10^{0.01}) \times 14.5 \ \mu s$ |
| 3 | $(10^{0.03}-10^{0.02}) \times 14.5 \ \mu s$ |
| - | - |
| - | - |
| i | $(10^{0.01i}-10^{0.01(i-1)}) \times 14.5 \ \mu s$ |
| - | - |
| - | - |
| 255 | $(10^{2.55}-10^{2.54}) \times 14.5 \ \mu s$ |

| For blue Counter value | Period |
|---|---|
| 0 | $1 \times 8.7 \ \mu s$ |
| 1 | $(10^{0.01}-1) \times 8.7 \ \mu s$ |
| 2 | $(10^{0.02}-10^{0.01}) \times 8.7 \ \mu s$ |
| 3 | $(10^{0.03}-10^{0.02}) \times 8.7 \ \mu s$ |
| - | - |
| - | - |
| i | $(10^{0.01i}-10^{0.01(i-1)}) \times 8.7 \ \mu s$ |
| - | - |
| - | - |
| 255 | $(10^{2.55}-10^{2.54}) \times 8.7 \ \mu s$ |

| For red Counter value | Period |
|---|---|
| 0 | $1 \times 29 \ \mu s$ |
| 1 | $(10^{0.01}-1) \times 29 \ \mu s$ |
| 2 | $(10^{0.02}-10^{0.01}) \times 29 \ \mu s$ |
| 3 | $(10^{0.03}-10^{0.02}) \times 29 \ \mu s$ |

(continued)

| For red Counter value | Period |
|---|---|
| - | - |
| - | - |
| i | $(10^{0.01i} - 10^{0.01(i-1)}) \times 29 \ \mu s$ |
| - | - |
| - | - |
| 255 | $(10^{2.55} - 10^{2.54}) \times 29 \ \mu s$ |

Incidentally, with regard to the cyan wedge by the red exposure and the yellow wedge by the blue exposure, the same test results were obtained. As mentioned above, according to the present emodiment, since the width of the enable signal can be freely changed, the gradation can be adjusted in accordance with the output characteristics of the apparatus and the characteristics of the photosensitive material.

Further, in the time period necessary from the start of the light emission to the end of the light emission for one line during which the exposure was conducted while the shift and stop of the printing paper was repeated, the test was conducted by changing the ratio "$r_t$" of the time period of the shift was changed to 50 % and 30 %. In the time of "$r_t$" = 30 %, an irregularity was observed in the image. On the other hand, in the time of "$r_t$" = 50 %, the density in each pixel region was unified, no irregularity was observed, and further, the density in each pixel region did not become the saturated density from the low image density level. Accordingly, test results that the responding ability for the gradation was improved so as to attain good gradation was obtained.

As explained above, with Structure 1-1, 1-2, 2-1 or 2-2, on the condition that a plurality of recording elements are driven and that the recording condition is close to an actual image recording condition, a light amount is obtained and correction is conducted, whereby density unevenness caused by the deviation in the light emission characteristics of each recording element can be reduced, a high resolution continuous gradation image can be obtained and a high quality image can be formed, without resulting in a complicated expensive apparatus.

With Structure 3, since density measurement values can be handled as light amount data on condition equal to the condition that the recording elements are driven so as to actually output an image, a far better image without the density unevenness can be obtained.

With Structure 4, since the relationship between the light emission time and the density in the case of plural time exposures in which the exposure is conducted plural times is obtained and the correction is conducted based on the relationship, the density unevenness caused by the discontinuity in the relationship between the light emission time and the density can be eliminated more precisely and a far better image with less density unevenness can be obtained.

With Structure 5, since the light amount data are obtained directly on the actual image recording condition, the control can be simplified. In addition, density unevenness can be reduced so that the high image quality can be obtained.

With Structure 6, by using the measurement value of a single element together, a small density unevenness for each pixel can be reduced in addition to the unevenness of a large pitch, so that a high quality image can be obtained.

With Structure 7, since light measurement for a single element is conducted on condition that plural recording elements are emitting light, a correction value can be calculated far more precisely, so that a high quality image can be obtained.

With Structure 8, the driving means conducts the driving for the On-Off recording plural times for the silver halide photosensitive material in accordance with the time period of the enable signal. Accordingly, continuous gradation recording can be conducted so that a high quality image can be obtained without causing the apparatus to be complicated and a high cost.

With Structure 9, since the enable signal for each color can be set to conform with the sensitivity and the gradation characteristics of each photosensitive layer of the silver halide color photosensitive material, a continuous gradation image with a high resolution can be recorded on the silver halide color photosensitive material with the utilization of the characteristics of the silver halide photosensitive material without causing the apparatus to be complicated and a high cost.

Further, with the effect of the intermittent exposure effect which is the characteristics of the silver halide color photosensitive material, the difference between the high and low sensitivities becomes large and the color cross talk can be reduced so that color separation can be improved. In addition, the spread of dots can be further widened so that the density of each dot region can be unified. As a result, a continuous gradation recording can be conducted so that a high quality image can be obtained without causing the apparatus to be complicated and a high cost for the purspose of positional registration for each color.

With Structure 10, since the plurality of recording elements arranged in an array form of a single line or plural lines is composed of a light emitting member comprising an LED array, a vacuum fluorescent tube array or a liquid shutter array, the discontinuity of the gradation can be reduced.

As mentioned before, the silver chloride photosensitive material tends to cause the density unevenness greatly due to the influence of the multi-exposure effect by the plural time exposures or the intermittent exposure effect.

However, with Structure 11, since the density unevenness is improved appreciably, the effect of the present invention for the silver chloride photosensitivity material is greater and the developing process can be conducted at a high speed.

With Structure 12, the enable signal corresponding to the density value of the image data can be set without causing the apparatus to be complicated at high cost.

With Structure 13, since the time period of the enable signal can be adjusted respectively by increasing or decreasing "t", the smooth gradation recording can be conducted.

With Structure 14, the apparatus can be simplified and the similar gradation recording can be realized by the simpler structure.

With Structure 15, since the time period of the enable signal can be adjusted finely, the gradation charcteristics can be adjusted in accordance with the output characteristics of the apparatus.

Further, with Structures 16, 17 and 18, more continuous gradation characteristics can be obtained.

With Structure 19, the gradation characteristics can be controlled with the time period of the enable signal. In addition, in cases where the exposure is conducted while the shifting is conducted, the unevenness recording caused in accordance with the spread of dod in the time of area modulation can be reduced.

With Structure 20, since the exposure is conducted while the shifting is conducted, the density in the dot region can be unified and the responding ability in the gradation control can be improved.

## Claims

1. A method of forming an image on a silver halide photosensitive material with a plurality of exposing elements aligned in the form of at least a single line, wherein each exposing element is driven so as to conduct an On-Off exposure independently, comprising steps of:

   obtaining light amount data for each exposing element on the condition that plural ones of said exposing elements are being driven;
   determining a correction value for an exposure amount of each exposing element on the basis of the light amount data;
   correcting an exposure amount for each exposing element on the basis of the correction value; and
   forming the image on the silver halide photosensitive material in such a manner that the plurality of exposing elements are driven so as to conduct the On-Off exposure plural times in accordance with image data and the correction values.

2. The method of claim 1, wherein the plural ones of exposing elements driven in the step of obtaining the light amount data are of the same kind.

3. The method of claim 1, wherein, in the step of the obtaining the light amount data, the silver halide photosensitive material is exposed by the plural ones of exposing elements and the light amount data are obtained by measuring the density of the exposed photosensitive material.

4. The method of claim 3, wherein the relation between the measured density data and the light amount data is so obtained that the measured density data for each exposing element is converted into the light amount data, and the correction value of the exposure amount of each exposing element is obtained from the light amount data.

5. The method of claim 1, wherein when the plural ones of the exposing elements are driven simultaneously so as to emit lights, the exposure amount is measured so as to obtain the light amount data.

6. The method of claim 5, wherein the correction value for the exposure amount of each exposing element is obtained with the use of both said light amount data and a single light amount of each exposure element which is obtained by measuring an exposure amount on the condition that the exposing elements are driven one by one so that only a single element emits a light.

7. The method of claim 5, wherein the light amount data is obtained by measuring an exposure amount of each exposing element.

8. The method of claim 1, wherein the image forming step comprises

storing image data in latch means for each line of pixels,
generating an enable signal by enable signal generating means every time the image data is latched by the latch means, wherein the enable signals are converted into a combination of time widths of the same or different lengths in accordance with the image data,
driving each of the exposing elements respectively by the driving means on the basis of the converted enable signals generated so as to conduct the On-Off exposure plural times in accordance with the combined time widths of the enable signal.

9. The method of claim 8, wherein the driving means conducts the On-Off exposure plural times in accordance with the time width of the enable signal so that the length of the total recording time period of each exposing element set by the enable signal generated by the enable signal generating means corresponds to the gradation of the image data, and

wherein the image is formed by a recording head composed of the exposing elements by which light of a plurality of colors corresponding to the plurality of photosensitive layers differing in color-sensitivity of the silver halide color photosensitive material is controlled.

10. The method of claim 9, wherein the recording head is composed of at least one of a LED array, a vacuum fluorescent tube array and a liquid crystal shutter array.

11. The method of claim 8, wherein the exposing elements conduct the exposure for a color photographic printing paper of a silver chloride photosensitive material so that the image is formed.

12. The method of claim 8, wherein each time width of the enable signal is converted into a multi-valued digital value in accordance with the gradation of the image data, the driving means changes said each time width sequentially in accordance with the weight of each bit of said digital value that is represented by a binary number, and the driving means drives each exposing element individually so as to conduct the On-Off exposure.

13. The method of claim 8, wherein the driving means drives each exposing element indiviually so as to conduct the On-Off exposure with each time width of the enable signal being defined by $2^n T + t$, wherein "n" is an integer number greater than or equal to zero for the time when said each time width of the enable signal is converted in a digital value in accordance with the gradation of the image data, "T" is a unit time, "t" is one of a negative and positive predetermined time.

14. The method of claim 8, wherein each time width of the enable signal generated is made a constant, and the driving means drives each recording element individualy so as to conduct the On-Off exposure by a number of times that corresponds to the value of the image data.

15. The method of claim 14, wherein the enable signal generating means changeably sets the constant time width of the enable signal generated by stages.

16. The method of claim 8, wherein the plurality of recording elements are aligned in an array form of a single line or plural lines, and the ratio of the exposure size (a) of a single recording element in the aligned direction to the recording pitch (b) in the aligned direction is 0.7 to 1.2.

17. The method of claim 16, wherein the ratio of the exposure size (A) of a single exposing element in the vertical direction with regard to the aligned direction to the recording pitch (B) in the vertical direction with regard to the aligned direction is 0.3 to 1.0.

18. The method of claim 16, wherein the exposure size of a single exposing element in the vertical direction with regard to the aligned direction is defined as "A", the recording pitch in the vertical direction with regard to the aligned direction is defined as "B", and the ratio of the time period from the start of light emission to the completion of the light emission for a single line to the recording time cycle for the single line is difined as "C", the recording is conducted so as to satisfy the following formula:

$$0.8 \leq (A/B + C) \leq 1.3$$

**19.** The method of claim 8, wherein in the time of the gradation recording conducted by stages, an interval time period between each enable signal in which the enable singal is in a rest condition is set to more than 2 micro seconds.

**20.** The method of claim 8, further comprising shift control means for conducting a shift control in such a manner that a shift and stop of the silver halide photosensitive material is repeated in the vertical direction with regard to the aligned direction of the exposing elements, and the recording is conducted with the use of the exposure more than 50 % of the time period from a start of exposure to a completion of exposure of the exposing elements for a single line while the silver halide color photosensitive material is shifting on the basis of the shift control by the shift control means.

**21.** An apparatus for forming an image on a silver halide photosensitive material, comprising

a plurality of exposing elements (30a-c;34) which are aligned in the form of at least a single line, each exposing element driven so as to conduct an On-Off exposure independently,

control means (61-68) and light sensing means (55) for obtaining light amount data for each exposing element on the condition that plural ones of said exposing elements are being driven, for obtaining a correction value for an exposure amount of each exposing element on the basis of the light amount data, and for correcting an exposure amount for each exposing element on the basis of the correction value; and

control means (40) for controlling the plurality of exposing elements to conduct the On-Off exposure plural times in accordance with image data and the correction values so that the image is formed on the silver halide photosensitive material.

**22.** The apparatus of claim 21, wherein the plural ones of exposing elements driven for obtaining the light amount data are of the same kind.

**23.** The apparatus of claim 21, wherein the time width of the On-Off exposure are modulated in accordance with image data.

**Patentansprüche**

**1.** Ein Verfahren zum Erzeugen eines Bildes auf einem lichtempfindlichen Silberhalogenid-Material mit einer Mehrzahl von in der Form von mindestens einer einzelnen Zeile ausgerichteten Belichtungselementen, wobei jedes Belichtungselement derart angesteuert wird, daß dieses eine An-Aus-Belichtung unabhängig durchführt, mit folgenden Schritten:

Erhalten von Lichtmengendaten für jedes Belichtungselement unter der Bedingung, daß mehrere der Belichtungselemente angesteuert werden;
Bestimmen eines Korrekturwertes für eine Belichtungsmenge für jedes Belichtungselement auf der Basis der Lichtmengendaten;
Korrigieren einer Belichtungsmenge für jedes Belichtungselement auf der Basis des Korrekturwerts; und
Erzeugen des Bildes auf dem lichtempfindlichen Silberhalogenid-Material derart, daß die Mehrzahl der Belichtungslemente so angesteuert wird, daß diese die An-Aus-Belichtung mehrere Male gemäß den Bilddaten und den Korrekturwerten durchführen.

**2.** Das Verfahren gemäß Anspruch 1, wobei die mehreren Belichtungselemente, die in dem Schritt des Erhaltens der Lichtmengendaten angesteuert werden, gleichartig sind.

**3.** Das Verfahren gemäß Anspruch 1, wobei in dem Schritt des Erhaltens der Lichtmengendaten das lichtempfindliche Silberhalogenid-Material durch die mehreren Belichtungselemente belichtet wird und die Lichtmengendaten durch Messen der Dichte des belichteten lichtempfindlichen Materials erhalten werden.

**4.** Das Verfahren gemäß Anspruch 3, wobei die Beziehung zwischen den gemessenen Dichtedaten und den Lichtmengendaten derart erhalten wird, daß die gemessenen Dichtedaten für jedes Belichtungselement in die Lichtmengendaten konvertiert werden, und der Korrekturwert der Belichtungsmenge jedes Belichtungselements von den Lichtmengendaten erhalten wird.

5. Das Verfahren gemäß Anspruch 1, wobei, wenn die mehreren Belichtungselemente gleichzeitig angesteuert werden, um Licht zu emittieren, die Belichtungsmenge derart gemessen wird, um die Lichtmengendaten zu erhalten.

6. Das Verfahren gemäß Anspruch 5, wobei der Korrekturwert für die Belichtungsmenge jedes Belichtungselementes unter Verwendung sowohl der Lichtmengendaten als auch einer einzelnen Lichtmenge jedes Belichtungselements erhalten wird, die durch Messen einer Belichtungsmenge unter der Bedingung erhalten wird, daß die Belichtungselemente einer nach dem anderen angesteuert werden, so daß nur ein einzelnes Element Licht emittiert.

7. Das Verfahren gemäß Anspruch 5, wobei die Lichtmengendaten durch Messen einer Belichtungsmenge jedes Belichtungselementes erhalten werden.

8. Das Verfahren gemäß Anspruch 1, wobei der bilderzeugende Schritt umfaßt:

    Speichern von Bilddaten in einer Haltespeichereinrichtung für jede Zeile von Pixeln bzw. Bildpunkten,
    Erzeugen eines Freigabesignals durch eine Freigabesignalerzeugungseinrichtung jedesmal, wenn die Bilddaten durch die Haltespeichereinrichtung gehalten werden, wobei die Freigabesignale in eine Kombination von Zeitbreiten gleicher oder unterschiedlicher Längen gemäß der Bilddaten konvertiert werden,
    Ansteuern jedes der Belichtungselemente jeweils durch die Ansteuer- bzw. Treibereinrichtung auf der Basis der konvertierten Freigabesignale, die erzeugt werden, damit diese die An-Aus-Belichtung mehrere Male gemäß der kombinierten Zeitbreiten des Freigabesignals durchführen.

9. Das Verfahren gemäß Anspruch 8, wobei die Ansteuer- bzw. Treibereinrichtung die An-Aus-Belichtung mehrere Male gemäß der Zeitbreite des Freigabesignals durchführt, so daß die Länge der gesamten Aufzeichnungszeitspanne jedes Belichtungselementes, die durch das durch die Freigabesignalerzeugungseinrichtung erzeugte Freigabesignal eingestellt wird, der Gradation der Bilddaten entspricht, und

    wobei das Bild durch einen Aufzeichnungskopf erzeugt wird, der aus den Belichtungselementen aufgebaut ist, durch die Licht einer Mehrzahl von Farben entsprechend der Mehrzahl der lichtempfindlichen Schichten, die sich in der Farbempfindlichkeit von dem farblichtempfindlichen Silberhalogenid-Material unterscheiden, gesteuert wird.

10. Das Verfahren gemäß Anspruch 9, wobei der Aufzeichnungskopf aus mindestens einem LED-Array, einem Vakuumleuchtstoffröhren-Array und einem Flüssigkristallverschluß-Array aufgebaut ist.

11. Das Verfahren gemäß Anspruch 8, wobei die Belichtungselemente die Belichtung für ein farbphotographisches Druckpapier eines lichtempfindlichen Silberchlorid-Materials durchführen, so daß das Bild erzeugt wird.

12. Das Verfahren gemäß Anspruch 8, wobei jede Zeitbreite des Freigabesignals in einen mehrwertigen Digitalwert gemäß der Gradation der Bilddaten konvertiert wird, die Ansteuer- bzw. Treibereinrichtung jede der Zeitbreiten sequentiell gemäß dem Gewicht jedes Bits des Digitalwerts, das durch eine Binärzahl dargestellt ist, ändert, und die Ansteuer- bzw. Treibereinrichtung jedes Belichtungselement einzeln ansteuert, um die An-Aus-Belichtung durchzuführen.

13. Das Verfahren gemäß Anspruch 8, wobei die Ansteuer- bzw. Treibereinrichtung jedes Belichtungselement einzeln ansteuert, um die An-Aus-Belichtung mit jeder Zeitbreite des Freigabesignals, die durch $2^n T + t$ definiert ist, wobei "n" eine ganze Zahl größer als oder gleich Null für die Zeit ist, wenn bzw. in der jede Zeitbreite des Freigabesignals in einen Digitalwert gemäß der Gradation der Bilddaten konvertiert wird, "T" eine Zeiteinheit ist und "t" eine negative oder positive vorbestimmte Zeit ist.

14. Das Verfahren gemäß Anspruch 8, wobei jede Zeitbreite des erzeugten Freigabesignals zu einer Konstante gemacht wird, und die Ansteuer- bzw. Treibereinrichtung jedes Aufzeichnungselement einzeln derart ansteuert, daß die An-Aus-Belichtung eine Anzahl von Malen durchgeführt wird, die dem Wert der Bilddaten entspricht.

15. Das Verfahren gemäß Anspruch 14, wobei die Freigabesignalerzeugungseinrichtung die konstante Zeitbreite des erzeugten Freigabesignales in Stufen veränderbar einstellt.

16. Das Verfahren gemäß Anspruch 8, wobei die Mehrzahl der Aufzeichnungselemente in einer Array-Form einer einzelnen oder mehrerer Zeile(n) ausgerichtet ist, und das Verhältnis der Belichtungsgröße (a) eines einzelnen Aufzeichnungselementes in der ausgerichteten Richtung zu dem Aufzeichnungsabstand (b) in der ausgerichteten Richtung 0,7 bis 1,2 beträgt.

17. Das Verfahren gemäß Anspruch 16, wobei das Verhältnis der Belichtungsgröße (A) eines einzelnen Belichtungselementes in der vertikalen Richtung hinsichtlich der ausgerichteten Richtung zu dem Aufzeichnungsabstand (B) in der vertikalen Richtung hinsichtlich der ausgerichteten Richtung 0,3 bis 1,0 beträgt.

18. Das Verfahren gemäß Anspruch 16, wobei die Belichtungsgröße eines einzelnen Belichtungselementes in der vertikalen Richtung hinsichtlich der ausgerichteten Richtung als "A" definiert ist, der Aufzeichnungsabstand in der vertikalen Richtung hinsichtlich der ausgerichteten Richtung als "B" definiert ist und das Verhältnis der Zeitspanne vom Start der Lichtemission bis zur Beendigung der Lichtemission für eine einzelne Zeile zu dem Aufzeichnungszeitzyklus für die einzelne Zeile als "C" definiert ist, wobei die Aufzeichnung derart durchgeführt wird, daß die folgende Formel erfüllt ist:

$$0{,}8 \leq (A/B + C) \leq 1{,}3$$

19. Das Verfahren gemäß Anspruch 8, wobei in der Zeit der in Stufen durchgeführten Gradationsaufzeichnung eine Intervallzeitspanne zwischen jedem Freigabesignal, in der das Freigabesignal in einem Ruhezustand ist, auf mehr als 2 Mikrosekunden eingestellt ist.

20. Das Verfahren gemäß Anspruch 8, das ferner eine Schiebesteuerungseinrichtung zum Durchführen einer Schiebesteuerung auf eine solche Art und Weise aufweist, daß ein Verschieben und ein Anhalten des lichtempfindlichen Silberhalogenid-Materials in der vertikalen Richtung hinsichtlich der ausgerichteten Richtung der Belichtungselemente wiederholt wird, und die Aufzeichnung unter Verwendung der Belichtung mehr als 50% der Zeitspanne vom Start der Belichtung zu einer Beendigung der Belichtung der Belichtungselemente für eine einzelne Zeile durchgeführt wird, während sich das farblichtempfindliche Silberhalegonid-Material auf der Basis der Schiebesteuerung durch die Schiebesteuerungseinrichtung verschiebt.

21. Eine Vorrichtung zum Erzeugen eines Bildes auf einem lichtempfindlichen Silberhalogenid-Material, mit folgenden Merkmalen:

eine Mehrzahl von Belichtungselementen (30a-c;34), die in der Form von mindestens einer einzelnen Zeile ausgerichtet sind, wobei jedes Belichtungselement derart angesteuert wird, daß dieses eine An-Aus-Belichtung unabhängig durchführt,

eine Steuereinrichtung (61-68) und lichterfassende Mittel (55) zum Erhalten von Lichtmengendaten für jedes Belichtungselement unter der Bedingung, daß mehrere der Belichtungselemente angesteuert werden, zum Erhalten eines Korrekturwerts für eine Belichtungsmenge jedes Belichtungselements auf der Basis der Lichtmengendaten, und zum Korrigieren einer Belichtungsmenge für jedes Belichtungselement auf der Basis des Korrekturwerts; und

eine Steuereinrichtung (40) zum Steuern der Mehrzahl der Belichtungslemente, um die An-Aus-Belichtung mehrere Male gemäß den Bilddaten und den Korrekturwerte durchzuführen, so daß das Bild auf dem lichtempfindlichen Silberhalogenid-Material erzeugt wird.

22. Die Vorrichtung gemäß Anspruch 21, wobei die mehreren Belichtungselemente, die zum Erhalten der Lichtmengendaten angesteuert werden, gleichartig sind.

23. Die Vorrichtung gemäß Anspruch 21, wobei die Zeitbreiten der An-Aus-Belichtung gemäß den Bilddaten moduliert werden.

**Revendications**

1. Procédé de formation d'une image sur une matière photosensible à base d'halogénure en argent avec une pluralité d'éléments d'exposition alignés sous forme d'au moins une ligne seule, dans lequel chaque élément d'exposition est excité de façon à réaliser indépendamment une exposition/non exposition, comprenant les étapes consistant:

- à obtenir des données de quantité de lumière pour chaque élément d'exposition dans le cas où plusieurs éléments desdits éléments d'exposition sont excités;
- à déterminer une valeur de correction pour une quantité d'exposition de chaque élément d'exposition sur la base des données de quantité de lumière;
- à corriger une quantité d'exposition pour chaque élément d'exposition sur la base de la valeur de correction; et
- à former l'image sur la matière photosensible à base d'halogénure d'argent de manière telle que la pluralité des éléments d'exposition est excitée de façon à réaliser différentes durées d'exposition/non exposition conformément aux données d'image et des valeurs de correction.

2. Procédé selon la revendication 1, dans lequel plusieurs éléments des éléments d'exposition excités dans l'étape consistant à obtenir les données de quantité de lumière sont du même type.

3. Procédé selon la revendication 1, dans lequel, dans l'étape consistant à obtenir les données de quantité de lumière, la matière photosensible à base d'halogénure d'argent est exposée par plusieurs éléments des éléments d'exposition et les données de quantité de lumière sont

4. Procédé selon la revendication 3, dans lequel la relation entre les données de densité mesurées et les données de quantité de lumière est obtenue de sorte que les données de densité mesurées pour chaque élément d'exposition sont converties en données de quantité de lumière, et que la valeur de correction de la quantité d'exposition de chaque élément d'exposition est obtenue à partir des données de quantité de lumière.

5. Procédé selon la revendication 1, dans lequel quand plusieurs éléments des éléments d'exposition sont excités simultanément de façon à émettre des lumières, la quantité d'exposition est mesurée de façon à obtenir les données de quantité de lumière.

6. Procédé selon la revendication 5, dans lequel la valeur de correction pour la quantité d'exposition de chaque élément d'exposition est obtenue en utilisant à la fois lesdites données de quantité de lumière et une seule quantité de lumière de chaque élément d'exposition que l'on obtient en mesurant une quantité d'exposition dans le cas les éléments d'exposition sont excités un par un de sorte qu'un seul élément émet une lumière.

7. Procédé selon la revendication 5, dans lequel les données de quantité de lumière sont obtenues en mesurant une quantité d'exposition de chaque élément d'exposition.

8. Procédé selon la revendication 1, dans lequel l'étape consistant à former une image consiste:

- à mémoriser des données d'image dans un moyen de registre pour chaque ligne de pixels;
- à engendrer un signal de validation par un moyen engendrant un signal de validation chaque fois que les données d'image sont saisies par le moyen de registre, dans lequel les signaux de validation sont convertis en une combinaison de durées de longueurs identiques ou différentes conformément aux données d'image;
- à exciter chacun des éléments d'exposition respectivement par le moyen d'excitation sur la base des signaux de validation convertis engendrés de façon à réaliser les différents temps d'exposition/non exposition conformément aux durées combinées du signal de validation.

9. Procédé selon la revendication 8, dans lequel le moyen d'excitation réalise les différentes durées d'exposition/non exposition conformément à la durée du signal de validation de sorte que la longueur de la durée d'enregistrement totale de chaque élément d'exposition fixée par le signal de validation engendré par le moyen engendrant un signal de validation correspond à la gradation des données d'image; et
dans lequel l'image est formée par une tête d'enregistrement composée des éléments d'exposition grâce à laquelle la lumière d'une pluralité de couleurs correspondant à la pluralité de couches photosensibles différant en sensibilité à la couleur de la matière photosensible à la couleur à base d'halogénure d'argent est commandée.

10. Procédé selon la revendication 9, dans lequel la tête d'enregistrement est composée d'au moins une rangée de LED, d'une rangée de tubes fluorescents et d'une rangée d'obturateurs à cristaux liquides.

11. Procédé selon la revendication 8, dans lequel les éléments d'exposition réalisent l'exposition pour un papier d'im-

EP 0 713 328 B1

pression photographique couleur d'une matière photosensible de chlorure d'argent de sorte que l'image est formée.

**12.** Procédé selon la revendication 8, dans lequel chaque durée du signal de validation est convertie en une valeur numérique à valeur multiple conformément à la gradation des données d'image, le moyen d'excitation change ladite chaque durée séquentiellement conformément au poids de chaque bit de ladite valeur numérique qui est représentée par un nombre binaire, et le moyen d'excitation excite chaque élément d'exposition individuellement de façon à réaliser l'exposition/non exposition.

**13.** Procédé selon la revendication 8, dans lequel le moyen d'excitation excite chaque élément d'exposition individuellement de façon à réaliser l'exposition/non exposition avec chaque durée du signal de validation étant définie par $2^nT+t$ dans laquelle "n" est un nombre entier supérieur ou égal à zéro pendant la durée quand ladite chaque durée du signal de validation est convertie en une valeur numérique conformément à la gradation des données d'image, "T" est une durée unitaire, "t" est un élément d'une durée prédéterminée négative et positive.

**14.** Procédé selon la revendication 8, dans lequel chaque durée du signal de validation engendré est rendue constante, et le moyen d'excitation excite chaque élément d'enregistrement individuellement de façon à réaliser l'exposition/non exposition un nombre de fois qui correspond à la valeur des données de l'image.

**15.** Procédé selon la revendication 14, dans lequel le moyen engendrant un signal de validation fixe de façon interchangeable la durée constante du signal de validation engendré par les étapes.

**16.** Procédé selon la revendication 8, dans lequel la pluralité des éléments d'enregistrement est alignée sous forme de rangées d'une seule ligne ou de plusieurs lignes et le rapport de la taille d'exposition (a) d'un seul élément d'enregistrement dans la direction alignée au pas d'enregistrement (b) dans la direction alignée est de 0,7 à 1,2.

**17.** Procédé selon la revendication 16, dans lequel le rapport de la taille d'exposition (A) d'un élément d'exposition seul dans la direction verticale par rapport à la direction alignée au pas d'enregistrement (B) dans la direction verticale par rapport à la direction alignée est de 0,3 à 1,0.

**18.** Procédé selon la revendication 16, dans lequel la taille d'exposition d'un élément d'exposition seul dans la direction verticale par rapport à la direction alignée est définie par "A", le pas d'enregistrement dans la direction verticale par rapport à la direction alignée est définie par "B" et le rapport de la durée depuis le début d'émission de lumière à la fin de l'émission de lumière pour une ligne seule au cycle de temps d'enregistrement pour la ligne seule est défini par "C", l'enregistrement est réalisé de façon à satisfaire la formule suivante:

$$0,8 \leq (A/B + C) \leq 1,3$$

**19.** Procédé selon la revendication 8, dans lequel dans la durée de l'enregistrement de gradation réalisée par les étapes, une durée d'intervalle entre chaque signal de validation dans lequel le signal de validation est dans un état de repos, est fixée à plus de 2 microsecondes.

**20.** Procédé selon la revendication 8, comprenant de plus un moyen de commande de déplacement pour réaliser une commande de déplacement de manière telle qu'un déplacement et un arrêt de la matière photosensible à base d'halogénure d'argent sont répétés dans la direction verticale par rapport à la direction alignée des éléments d'exposition, et l'enregistrement est réalisé avec l'utilisation de l'exposition supérieure à 50% de la durée depuis un début d'exposition jusqu'à un achèvement d'exposition des éléments d'exposition pour une seule ligne alors que la matière photosensible à la couleur à base d'halogénure d'argent se déplace sur la base de la commande de déplacement par le moyen de commande de déplacement.

**21.** Appareil pour former une image sur une matière photosensible à base d'halogénure d'argent, comprenant:

- une pluralité d'éléments d'exposition (30a à c; 34) qui sont alignés sous forme d'au moins une ligne seule, chaque élément d'exposition étant excité de façon à réaliser une exposition/non exposition indépendamment;
- un moyen de commande (61 à 68) et un moyen sensible à la lumière (55) pour obtenir des données de quantité de lumière pour chaque élément d'exposition dans le cas où plusieurs éléments desdits éléments d'exposition sont excités, pour obtenir une valeur de correction pour une quantité d'exposition de chaque élément d'exposition sur la base des données de quantité de lumière, et pour corriger une quantité d'exposition pour chaque

26

élément d'exposition sur la base de la valeur de correction; et

- un moyen de commande (40) pour commander la pluralité d'éléments d'exposition pour réaliser les différentes durées d'exposition/non exposition conformément aux données d'image et aux valeurs de correction de sorte que l'image est formée sur la matière photosensible à base d'halogénure d'argent.

22. Appareil selon la revendication 21, dans lequel plusieurs éléments des éléments d'exposition excités pour obtenir les données de quantité de lumière sont du même type.

23. Appareil selon la revendication 21, dans lequel la durée de l'exposition/non exposition est modulée conformément aux données de l'image.

# FIG. 1

IMAGE DATA

40

30c

30b

30a

55

60

0

1

2

⬇

TO DEVELOPING PROCESS

# FIG. 2

PRINTING HEAD 30

31 SHIFT REGISTER

32 LATCH CIRCUIT

33 DRIVING CIRCUIT

DRIVING SIGNAL

34 RECORDING ELEMENT ARRAY

SELFOC LENS ARRAY 35

2

BIT DATA OF IMAGE DATA

SET PULSE SIGNAL

ENABLE SIGNAL

40 PRINTING HEAD CONTROL SECTION

8 BIT IMAGE DATA

CORRECTION DATA

55 LIGHT RECEIVING SENSOR

60 CORRECTION PROCESSING SECTION

LORRECTION DATA FROM OUTSIDE

## FIG. 3

PRINTING HEAD CONTROL SECTION 40

CORRECTION DATA — 8 BIT

IMAGE DATA — 8 BIT

41 MULTIPLIER → 42 INTERFACE → 43 CPU

44 COUNTER — 45 DEMULTIPLEXER

49 COUNTER

51 COUNTER

46 LINE MEMORY → 47 LINE MEMORY

1 BIT×1 LINE

50 SETPULSE SIGNAL GENERATING CIRCUIT

52 ENABLE SIGNAL GENERATING CIRCUIT

1 BIT×1 LINE

48 MULTIPLEXER

BIT DATA OF IMAGE DATA

SET PULSE SIGNAL

ENABLE SIGNAL

PRINTING HEAD 30

EP 0 713 328 B1

# FIG. 4

60

| LIGHT RECEIVING SENSOR CONTROL SECTION | 61 |

CONTROL SIGNAL

62

| LIGHT RECEIVING SENSOR DRIVING SYSTEM |

| LIGHT RECEIVING SENSOR (PHOTO-DIODE) | 55 |

| AMPLIFYING CIRCUIT | 64 |

65    ANALOG SIGNAL    67

| AD CONVERTER |    | MEMORY |

66

LIGHT AMOUNT CORRECTION DATA FROM OUTSIDE

| CORRECTION MEMORY |    | CORRECTION DATA CALCULATING SECTION |

68

CORRECTION DATA

# FIG. 5

BIT DATA OF IMAGE DATA — ~300 μs

MOST SIGNIFICANT BIT

2nd BIT   3rd BIT   4th BIT   5th BIT   6th BIT   7th BIT   LEAST SIGNIFICANT BIT

SETPULSE SIGNAL

←→ INTERVAL TIME 300 μs

ENABLE SIGNAL

2560 μs   1280 μs   640 μs   320 μs   160 μs   80 μs   40 μs   20 μs

START OF LIGHT EMISSION ~ COMPLETION 7.2ms

RECORDING CYCLE OF A SINGLE LINE 12ms

EP 0 713 328 B1

# FIG. 6

34

35

A B

a
b

SCANNING
DIRECTION

2

a    ALIGNING DIRECTION EXPOSURE SIZE
b    ALIGNING DIRECTION RECORDING PITCH
A    SCANNING DIRECTION EXPOSURE SIZE
B    SCANNING DIRECTION RECORDING PITCH

# FIG. 7

n-ORDER COUNTER VALUE DATA: 0 1 2 3 Ω 253 254 255

~50 μs

SETPULSE SIGNAL

↔ INTERVAL TIME

ENABLE SIGNAL

20 μs  20 μs  20 μs  20 μs  20 μs

20 μs  20 μs  20 μs

START OF LIGHT EMISSION ~ COMPLETION  7.2ms

RECORDING CYCLE OF A SINGLE LINE ~28ms

EP 0 713 328 B1

## FIG. 8

## FIG. 9

# FIG. 10

# FIG. 11

PEAK
POSITION
( i - 1 )

PEAK
POSITION
( i )

PEAK
POSITION
( i + 1 )

DENSITY

ALIGNING DIRECTION

DENSITY DATA SUMMING - UP RANGE

EP 0 713 328 B1

# FIG. 12

EP 0 713 328 B1

# FIG. 13 (a)      FIG. 13 (b)

LUMINANCE

PIXELNo.

LUMINANCE

PIXELNo.